# EUROPEAN PATENT SPECIFICATION

(11) **EP 1 412 610 B1**
(45) Date of publication and mention of the grant of the patent: **15.08.2018**
(21) Application number: 01985113.8
(22) Date of filing: 25.10.2001
(51) Int. Cl.: E21B 23/00, E21B 33/02, E21B 33/04, E21B 33/047

(54) **CLAMPING WELL CASINGS**
KLEMMEN VON BOHRLOCHVERROHRUNGEN
SERRAGE DE TUBAGES DE PUITS

(30) Priority: 25.10.2000 US 696427
(43) Date of publication of application: 28.04.2004
(73) Proprietor: Plexus Holdings, PLC., Dyce Aberdeen AB21 0HW (GB)
(72) Inventor: van Bilderbeek, Bernard H., Houston, TX 77024 (US)
(74) Representative: Dummett Copp LLP
(86) International application number: PCT/US2001/049996
(87) International publication number: WO 2002/035257

(56) References cited:
- GB-A- 2 257 995
- US-A- 4 018 462
- US-A- 5 460 762
- US-A- 6 038 933
- US-A- 6 092 596

## Description

This is a continuation-in-part of U.S. Patent ApplicationNo. 09/563,959, filed on May 3, 2000.

### Field of the Invention

This application relates to the clamping of concentric well casings, where an inner well casing is to be clamped in position relative to an outer well casing, to achieve a desired relative axial position between the casings, for operational reasons axial fixing between coaxial well casings over a range of positions may be required at various times during drilling and/or production from wells, and the present application makes it possible to clamp one or more casings within another at any desired position and subsequently to unclamp the casings for disassembly, or to change their relative positions and then reclamp the casings in a new relative position. As the clamping mechanism is preinstalled and can be externally activated, the blowout preventers can remain in place throughout the installation, clamping or release of the subsequently installed casing.

### Background of the Invention

In oil and gas wells, it is conventional to pass a number of concentric tubes or casings down the well. An outermost casing is fixed in the ground, and the inner casings are each supported in the wellhead or in the next outer casing by casing or tubing hangers.

These casing hangers may take the form of a body with interengaging internal shoulders on the outer casing and a body with external shoulders on the inner casing hangers, located at fixed positions on each previously installed casing.

There are however applications where a fixed position casing hanger is unsatisfactory, because the hang-off point of one casing on another may require to be adjustable.

The application has particular application for such casing and tubing hangers, which require adjustment.

Where drilling or production wellheads have to accommodate a casing or tubing without predetermined hang-off point, it has been known to use casing slip-type support mechanisms.

It is also known from European patent number EP251595B2 to use an adjustable landing ring on a surface casing hanger to accommodate a space-out requirement.

It is furthermore known that where production wellheads have to accommodate casing or tubing with a tension load greater than the running weight, retractable shoulders or internal wedge mechanisms have been used to allow passing of the casing or tubing hanger; and re-tensioning to a predetermined point.

It is also known from US 6 092 596, which is considered the closest prior art, to secure concentric well tubes or casings in connection with the drilling art by using a tapered clamping sleeve to distort an outer casing or tube against a concentric inner casing or tube at the wellhead at the ton of the wellbore.

### Summary of the Invention

According to a first aspect of the present application, there is provided a pre-installed clamping arrangement for clamping a subsequently tubular of a first diameter within a previously installed tubular casing of larger internal diameter, the arrangement comprising a sleeve associated with the large diameter casing, the sleeve having a collar at one end which has an external tapered surface, the arrangement also including an annular component with an internal tapered surface, the sleeve and annular component being relatively axially moveable between a first position in which the tapered surface of the annular component exerts minimal of no radial force on the collar and a second position in which the tapered surface of the annular component exerts sufficient radial force to distort the collar into the bore of the larger diameter casing, to grip the well casing of smaller diameter, the arrangement also including a removable device for maintaining the surfaces in the first position, and separate means for urging the annular component axially against the collar.

The sleeve may be of one piece with the large diameter easing, but more probably will be a separate component which could either be threaded onto the casing or be located in a suitable locating and receiving area on the casing.

The clamping arrangement preferably also provides a sealing function across the interface between the tapered surfaces, either through the metal/metal contact between the tapered surfaces, or through a separate seal body. Where the sleeve is a separate component from the larger diameter casing, there may be a metal/metal seal between the tapered surfaces and, in addition, a separate seal between the sleeve and the casing.

The device for maintaining the surfaces in the first position is preferably a spacer ring. The spacer ring may be removable, or may be a ring which can be moved axially by rotating it on a thread.

The sleeve can be formed as part of a casing hanger used for supporting a casing in a well.

The annular component can be a wellhead spool, and means can be provided to move the annular component axially in a direction away from the sleeve. This means for moving can comprise a chamber between the sleeve and the annular component, and the chamber can be pressurized to urge the wellhead component away from the sleeve.

The means for urging the annular component axially against the collar can comprise radially extending bolts extending through threaded bores in the annular component and each ending in a tapered dog, and recesses around the larger diameter casing, the recesses having inclined flanks and being positioned so that when the bolts are screwed in, the dogs enter the recesses and make contact with the inclined flanks, and as the bolts are screwed further in, the annular component is drawn further towards the sleeve.

The internal bore of the larger diameter casing may have a constant internal diameter, and the sleeve can be located between the larger diameter casing and the annular component, and when the arrangement is in use, the sleeve is in abutment with the larger diameter casing.

According to a second aspect of the present application, there is provided a pre-installed clamping arrangement for clamping a subsequently installed tubular well casing of a first diameter within a previously installed tubular casing of larger internal diameter, wherein the larger diameter casing has a wall thickness which is sufficiently thin to allow the casing wall to be distorted inwards to grip the smaller diameter casing, the arrangement also comprising a compression unit which includes a compression collar surrounding the larger diameter casing, a compression ring axially movable relative to the collar and means for producing relative axial movement between the ring and the collar, the compression ring and compression collar having oppositely directed axially tapered annular surfaces, so that relative axial movement between the collar and ring produces a reduction in the internal diameter of the unit to distort the larger diameter casing inwards to grip the smaller diameter casing.

The tubular annular walls of oil well casings have to withstand substantial pressures, and it is this requirement to withstand certain pressures which generally determines the wall thickness of the casings. In most cases, casing walls will be too thick to allow inward deflection to grip an internal component. However by making the walls thin enough to allow such deflection, it becomes possible to achieve the advantageous clamping arrangement of the invention. It will be a matter of trial and error, or of relatively straightforward calculation, to determine the appropriate casing wall thickness for any particular application. Factors which have to be taken into account are the gap between the larger and smaller diameter casings (this gap has to be bridged when the clamp is tightened), the overall diameter of the casings and the material of which they are made. It is desirable to maintain deflection of the casing wall in the elastic range, thereby allowing the casing to expand to it's original diameter once the clamping or compression force has been removed. This allows the clamping arrangement to be reversed or disengaged relatively quickly and easily without any permanent alteration to the casing. The clamping system can, of course, plastically deflect the casing should such be required by a particular application. One such application would be clamping more than one inner casing. In such a case, it is likely that the outer casing would be plastically deformed because of the greater clamping force required to adequately grip the most inner casing.

The casing may be divided axially into different sections, and it can then be appropriate to make the section of the casing which is to be distorted inwards out of a high value/high strength material, in order to assist that section in withstanding high internal pressures and the effects of corrosion.

If it is not possible to achieve the necessary pressure resistance whilst allowing the necessary distortion for clamping to take place, then the thin walled tube may be externally reinforced to enable it to resist the hoop stresses arising when there is a high internal pressure.

The reinforcements may take the form of annular bands around the casing section, and these bands can provide the necessary thickness of material to allow a valve or valves to be fitted to the casing in the area where the casing wall is relatively thin.

The casing section where the compression unit is located may be readily separated from the rest of the casing, so that it can be replaced when necessary.

The compression unit preferably has a compression ring which is in contact with the outer surface of the large diameter casing and a compression collar which surrounds the ring and is axially movable relative to the ring. The ring may be split at one or more points around its circumference to assist assembly, and reduce radial stiffness.

The ring and the collar may each have one tapered annular surface. Alternatively, and preferably, the ring has two tapered surfaces, tapering in opposite axial directions, and the collar is split into two sections with opposite axial tapers and the means for producing the relative movement acts between the two sections of the collar to move the sections in opposite directions over the ring.

Preferably the ring has its region of greatest diameter between its two ends, and the two collar sections are drawn towards one another, for example by bolts through both sections, to compress the ring and thus to clamp the larger diameter casing onto the smaller diameter casing. Although a preferred method of drawing the two sections together is by use of a bolt, it should be understood that any suitable mechanism may be used bring the two sections together.

In addition to mechanical actuators, any suitable actuator may be used to create sufficient deflection in the outer casing. For instance, hydraulic pressure exerted on the exterior of the outer casing could be used or thermal energy could be used to create expansion and/or contraction of the outer casing thereby manipulating it's internal diameter.

The clamping arrangement described here can be used, as described, to clamp a plain walled tube. In some circumstances however (particularly for small diameter casings) it may be expedient to provide a small hanger shoulder to take a part of the casing load and/or to locate the tubular casings in a desired axial position before applying a clamping arrangement as described here to clamp the casings in position.

According to a third aspect of the application, there is provided a pre-installed clamping arrangement for clamping a subsequently installed tubular casing of a first diameter within a previously installed tubular casing of larger internal diameter, the arrangement comprising first and second compression rings having oppositely tapered external surfaces, an annular compression actuator having an internal tapered surface surrounding the first compression ring and an external tapered surface radially outside its internal tapered surface, and an annular component having two tapered surfaces, one of said surfaces mating with the second compression ring, and the other of said surfaces mating with the external tapered surface of the compression actuator, and means for moving the annular component axially relative to the compression rings and the compression actuator between a first position in which the tapered surfaces of the annular component exert no radial force on the compression rings or the compression actuator and a second position in which the tapered surfaces of the annular component exert sufficient radial force to distort the compression rings into the bore of the larger diameter casing, to grip the casing of smaller diameter.

### Brief Description of the Drawings

The application will now be further described, by way of example, with reference to the accompanying drawings, in which:
Figure 1 shows a cross section through a surface wellhead arrangement incorporating a first embodiment of a clamping arrangement in accordance with the present application;
Figure 2 shows a second embodiment of a clamping arrangement;
Figure 3 shows a detail, on a larger scale, a third embodiment of a clamping arrangement
Figure 4 shows, on a larger scale, a cross-section through a fourth embodiment of a clamping arrangement;
Figures 5 and 6 show two alternative arrangements incorporating the clamping arrangement of Figure 4;
Figure 7 shows a fifth embodiment of a clamping arrangement;
Figure 8 shows a sixth embodiment of a clamping arrangement;
Figure 9 shows a seventh embodiment of a clamping arrangement;
Figure 10 shows a hydraulically actuated clamping arrangement;
Figure 11 shows a thermally actuated clamping arrangement;
Figure 12 shows a clamping arrangement having an adjustable locking mechanism;
Figure 13 shows a clamping arrangement which includes slip segments;
Figure 14 shows a clamping arrangment which includes sensors;
Figure 15 shows a moveable clamping arrangement;
Figure 16 shows a clamping system for adjustment of tension and/or compression in a string;
Figure 17 shows a clamping arrangement for use at a subsea wellhead;
Figure 18 shows a riser spaceout system which employs the clamping system of the present application;
Figure 19 shows an eighth embodiment of the clamping arrangement;
Figure 20 shows a cross sectional view of a slotted casing which may be used in the application.

### Description of Preferred Embodiments

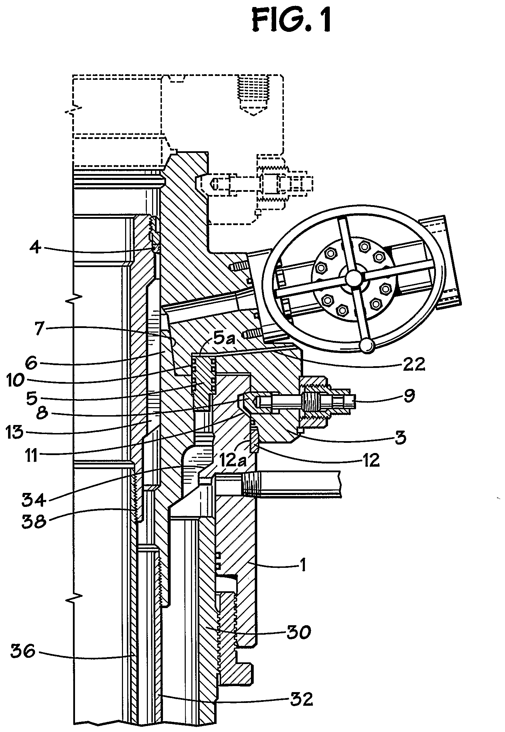

The adjustable wellhead shown in Figure 1 has a surface casing starting head 1 mounted on a casing section 30. An intermediate casing 32 is located in the casing 30 and has a casing hanger 2 by means of which the casing is landed on a shoulder 34. The hanger 2 has an extended upper neck 6 which has a tapered external profile.

A wellhead spool 3 is shown above the casing hanger 2. The wellhead spool has a tapered internal profile 7 which mates with the tapered external profile of the neck 6 and, in the position shown in Figure 1, the spool is supported above the hanger 2 on a spacer ring 12. An annular seal ring 5 fitted with O-rings 10 provides a seal between the spool 3, the starting head 1 and the casing hanger 2.

A chamber 5a is present above the seal ring 5. This chamber can be pressurized, through a passage 22, to raise the spool 3 above the starting head 1, and such raising action will have the effect of unloading the weight of the wellhead spool 3 from the spacer ring 12.

The spacer ring 12 is axially movable (possibly removable) and is fitted between the starter head 1 and the spool 3, and, when present, this spacer ring controls the extent to which the spool 3 can be lowered onto the starter head 1. In one position of the spacer ring, it prevents any effective contact between the tapered surfaces 6 and 7. In another position, it does not obstruct engagement of the tapered surfaces.

The ring can be moved axially by rotating it on a thread 12a so that it moves up and down along the string, on the thread. Alternatively, the ring can be simply removed to remove any obstruction to engagement of the surfaces 6 and 7.

Bolts 9 (only one of which can be seen in Figure 1), which each end in a tapered dog 8 which enters a tapered annular recess 11, allow the spool 3 to be drawn down onto the starter head 1. By screwing in the bolts, the dogs 8 bear against the tapered side wall of the recess 11 and the spool is pulled down by the camming action of the dogs. In practice, the spool will be drawn down by tightening each bolt around the string circumference, by a specified tightening extent, in turn. Working around the string circumference in this way will gradually pull the tapered surfaces 6 and 7 against one another to effect a clamping action.

A production casing 36 is run into the well on an adjustable surface casing hanger 4. The casing 36 is threadedly engaged at 38 with the hanger 4. The casing is slotted at 13 for flow-by, and the hanger is positioned so that part of its length is surrounded by the extended upper neck 6 of the casing hanger 2.

During running of the casing 36, the internal diameter of the neck 6 is such that the casing hanger 4 can move axially past the neck. At this stage, the spacer ring 12 is in its first position where it prevents engagement between the surfaces 6 and 7, the extended upper neck 6 is unstressed and so the casing hanger 4 is able to move freely past the neck 6.

However when the casing hanger 4 has reached a position within the intermediate casing hanger at which it is to be clamped, the annular chamber 5a is pressurized to lift the wellhead 3 and to allow the spacer ring 12 to be lowered or removed. Once this has happened, the annular seal 5 is relieved of pressure and both gravity and tightening of the tapered bolts 9, results in the wellhead 3 being lowered onto the casing hanger 2 so that the tapered surfaces 6, 7 come into contact with one another. On further tightening of the bolts 9, the wedging effect of the surfaces 6 and 7 results in the extended upper neck 6 being distorted into the path of the production casing hanger 4, to a position where it grips the casing hanger which therefore becomes clamped in the well at that point.

If the position in the well of the production casing then has to be altered, for example after tensioning the production casing, then this can be done by releasing the bolts 9 and then pressurizing the seal ring 5 to raise the wellhead. This relieves the wedging force acting on and distorting the extended upper neck. The neck then returns to its unstressed position where the casing hanger 4 can move freely axially past the neck.

When the casing components have taken up their new positions, for example after tensioning the production casing, then they can be clamped relative to one another by once again lowering the wellhead using the procedure described above to activate the clamp.

The bolts 9 with their clamping dogs 8 must be retracted before the wellhead can be fully lifted, and have to be fully inserted in order to apply maximum clamping force to the casing hanger 4.

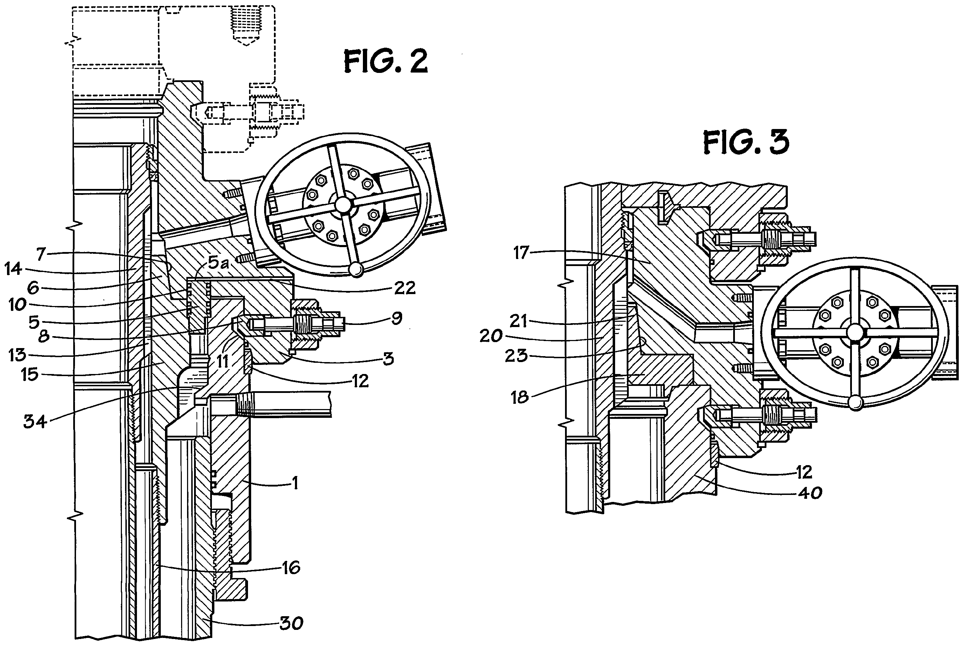

Figure 2 shows a second embodiment which is largely similar to the embodiment of Figure 1 except that the internal bore represented by the intermediate casing 16 and its casing hangar 15 now has a uniform internal diameter, so that the production casing hangar 14 can pass completely through the intermediate casing 16 and its hangar 15 when the clamp is not operated.

However, the production casing hangar 14 can be gripped and clamped in the intermediate casing 15, by a mechanism the same as that shown in Figure 1, and corresponding parts in Figure 2 carry the same reference numerals as they carry in Figure 1.

Figure 3 shows a wellhead housing 40 with a tubing head 17 installed above it. An extended upper neck 21 is formed on an annular component 18 which has an internal diameter just slightly greater than the external diameter of the tubing hanger 20. The tubing head has a tapered surface 23 which mates with the neck 21.

As described in relation to Figures 1 and 2, the surface of the neck 21 and the surface 23 of the tubing head 17 mate to form, when the tubing head is lowered onto the component 18, a clamp which clamps the tubing hanger 20 relative to the wellhead housing 40.

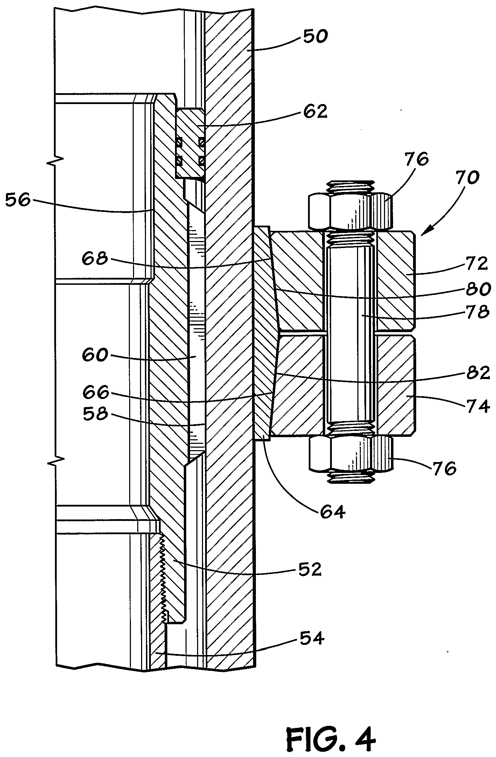

Figure 4 shows a well casing tube 50 within which a casing hanger 52 is positioned. The casing hanger 52 is a close fit within the internal wall of the tube 50, and a casing 54 is suspended from the lower end of the hanger 52. At the top of the hanger 52 is a socket 56 which can be used to connect a running tool to the hanger. The outer surface of the hanger, at 58, is relieved by a flow-by passage 60, and this passage is, when necessary, closed by an annular seal 62.

On the outside surface of the casing or wellhead housing 50, and alongside the position of the casing hanger 52, a compression ring 64 is fitted. This compression ring extends right the way around the casing 50, but may be split at one point around its circumference to allow it to be compressed and reduced in diameter. The ring 64 has two oppositely directed tapered surfaces 66, 68, and the point of greatest diameter of the ring is midway between its ends.

A compression collar 70 is made up of two collar sections 72 and 74 which can be drawn towards one another by tightening one or both of nuts 76 at opposite ends of the bolt 78. The collar sections 72 and 74 (which are each annular) have inwardly directed tapered faces 80 and 82 which match the tapered faces 66, 68 on the ring 64.

When the nuts 76 are tightened, the sections 72, 74 are drawn towards one another and they ride up the ramps 66, 68 with the result that the ring 64 is squeezed and reduced in diameter. This reduction in diameter is transmitted to the part of the casing 50 immediately within the ring 64, and the casing 50 will be compressed inwards to squeeze the casing against the outer surface 58 of the hanger 52.

It will be appreciated that there will be bolts 78 with nuts 76 arranged at regular intervals around the circumference of the compression unit 70, and to tighten the compression unit to produce clamping, it will be necessary that the bolts be tightened sequentially around the circumference until the correct clamping force has been achieved.

It will be clear that the clamping can only be effective if there is sufficient deformability within the casing tube 50. To achieve this deformation, it is likely that the tube 50 will have to be thinner than it would otherwise be. It is not however anticipated that a skilled man would find it difficult to design a tube which would have the necessary deformability for a particular application of this application.

Instead of bolts 78 and nuts 76, it may be possible to use an alternative mechanism which draws the two collar sections 72, 74 together.

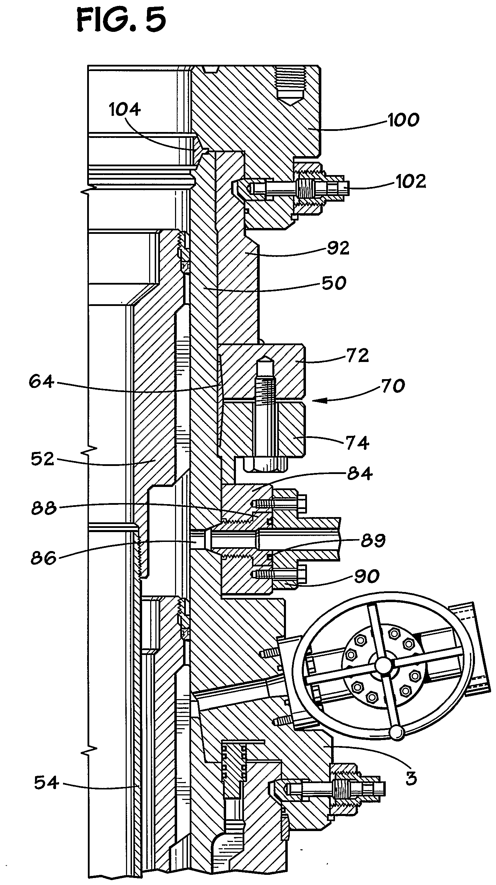

Figure 5 shows the arrangement of Figure 4, but on a smaller scale with other ancillary components also being in view.

Because the casing tube 50 is thinner than it would be expected to be (in the absence of the clamping arrangement described here) other devices are fitted around the tube, to strengthen the tube and to assist the tube in resisting hoop stresses caused by high internal pressures.

Below the pressure unit 70, there is a reinforcing ring 84 which is put in place by sliding it over the top of the casing 50. The ring 84 is annular in form to support the whole of the circumference of the tube 50.

At one or several points around the circumference of the casing tube 50 there is an outlet port 86, and the reinforcement ring 84 has a corresponding passage in which a threaded insert 88 is fitted. A valve flange 90 then is bolted onto the reinforcement ring 84. The threaded insert 88 is made up into the mouth of the opening 86, to form a metal-to-metal seal. On the side of the valve flange, the threaded insert 88 is fitted with an annular groove 89 into which a seal ring is fitted to effect a seal between the flange and the valve body.

The flange 90 will be the flange plate of a conventional valve (the valve itself is not shown here), so that when the assembly is completed, the valve can be opened or closed to open or close communication between the interior of the casing and the exterior through the passage 86.

Above the compression unit 70, there is an upper collar 92 which will be slid onto or threaded onto the external surface of the tube 50, to provide reinforcement in this upper area.

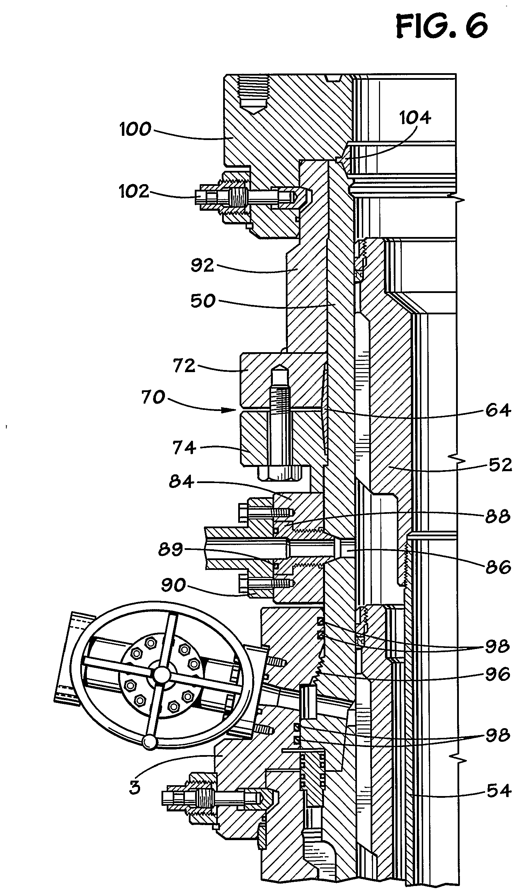

It will be seen in Figure 5 that the casing tube 50 is part of one piece of material with the wellhead spool 3. However in Figure 6, where the same parts carry the same reference numerals, the tube 50 is a separate component from the wellhead spool 3, with the two components being sealed to one another along a thread line 96, with the interposition of 0-ring seals 98. This construction makes it possible to manufacture the deformable tube 50 from a material different from the spool 3. It also makes it possible to replace the tube part 50 independently of the spool 3. The material and manufacturing of each of these parts can therefore be optimized for the particular function and an internally damaged wellhead can be refurbished by exchanging the tube 50 only.

Figures 5 and 6 also show a drilling riser connector 100 to which a drilling riser can be connected. The connector 100 is fitted to the reinforcing ring 92 and is secured on the ring by means of axially directed dogs 102, in a manner which is in itself known. A metal sealing ring 104 provides the necessary seal.

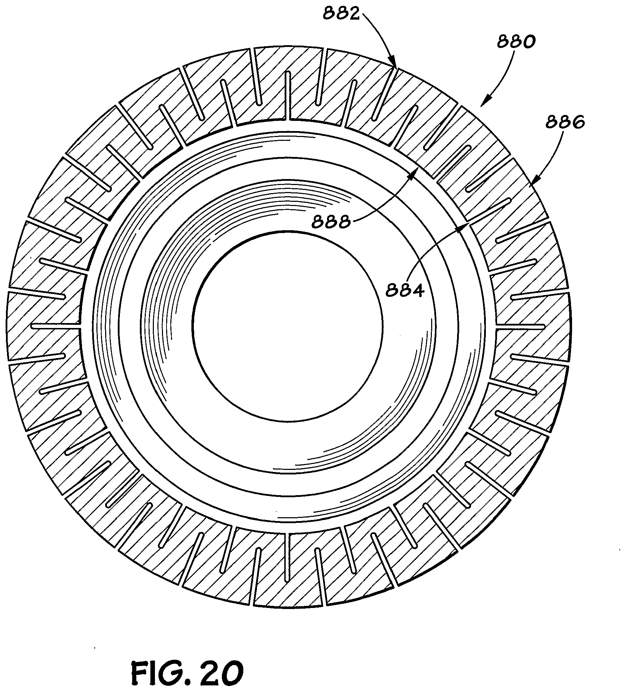

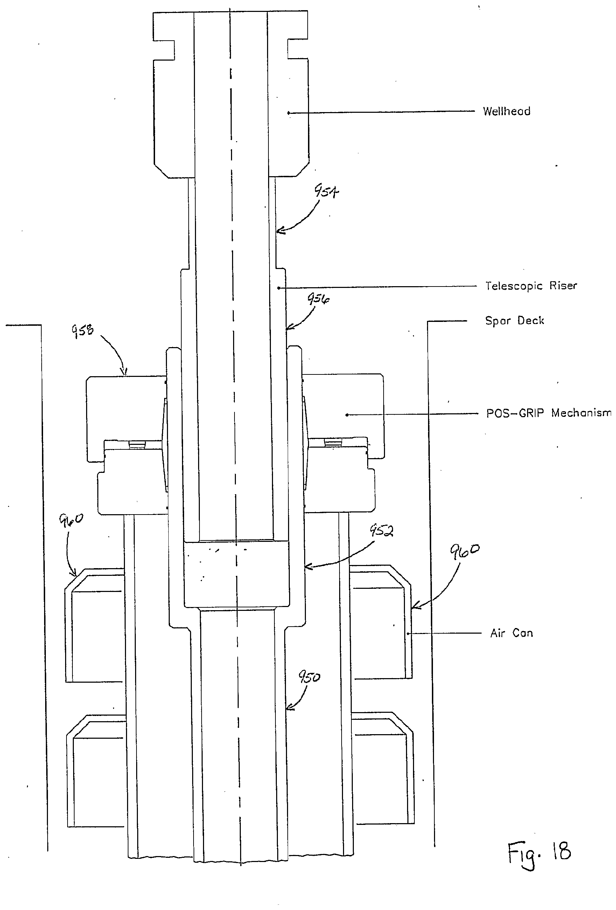

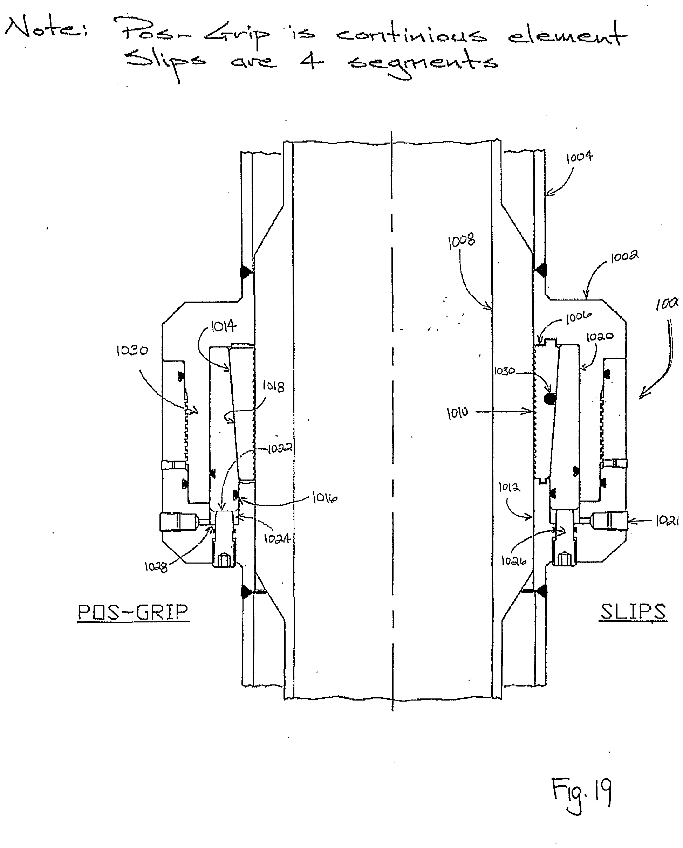

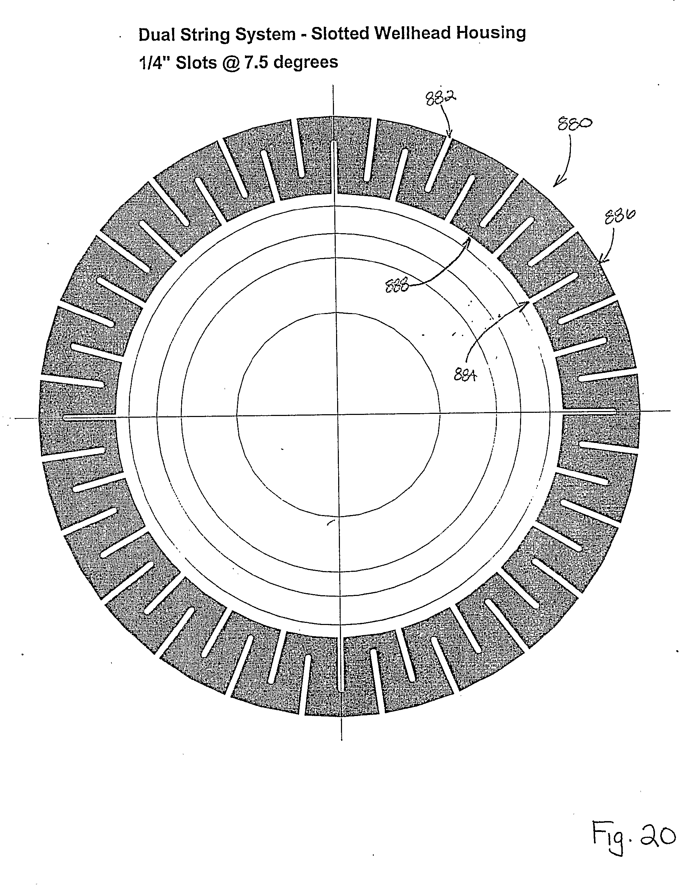

In order to effect the clamping more easily, tube 50 can be relatively thin, and can be economically made of a high value material. It may need to be a material particularly resistant to corrosion, and of course it has to be capable of the distortion necessary to achieve clamping. However because the tube is backed up around most, if not all, of its external circumference it does not need great mechanical strength. The mechanical strength can be provided by the surrounding components. In some cases, it may be necessary to provide a clamping force that will deform the casing tube 50 beyond it's elastic limit. For instance, where more than one inner casing must be clamped or gripped, the force required to clamp the innermost casing may likely cause plastic deflection of the outermost casing. In certain instances, it may be desirable to provide an outer casing that has more flexibility. Figure 20 shows such a casing. The slotted casing 880 has a plurality of outer or exterior slot 882 located at intervals along it's outer surface 886. Similarly, the slotted casing 880 also may have a plurality of inner or interior slots 884 formed at intervals along it's inner surface 888. These plurality of slots 882, 884 allow the casing 880 to flex or compress to a greater degree than non-slotted casing within the elastic range or for a given activation force. The slots also help to alleviate hoop stresses which may occur during compression of the casing. In a preferred embodiment, the slots are approximately 6,35 mm (0,25 inches) in width and are positioned every 7.5 degrees around the interior surface 888 and/or exterior surface 886 of the casing 880.

One particular advantage of the embodiment shown in Figures 4-6 is that there is no discontinuity in the wall of the casing, and therefore no potential leak path for the leakage of pressure.

It is thus possible to close off an annulus in an oil or gas well, with the closure and the seal being arranged at any convenient position along the length of the casing string.

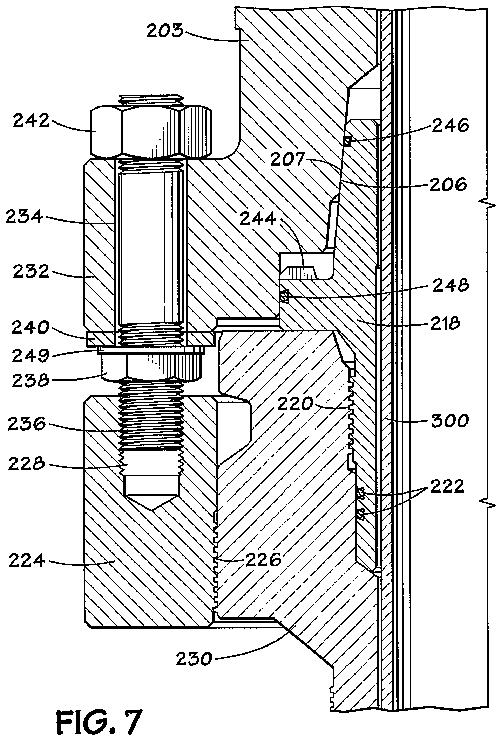

Figure 7 shows two adjacent casing sections 203 and 230. The upper casing section 203 has a tapered internal profile 207 which mates with a tapered external profile 206 of a clamp component 218. The component 218 is threaded to the lower casing section 230 at 220, and seals 222 provide the necessary sealing function.

Around the exterior of the casing section 230, an anchoring ring 224 is fitted, the ring being connected to, and adjustable relative to, the casing section on a thread 226. The ring 224 has a series of threaded bores 228 arranged around the circumference. Only one of these bores is visible in the figure.

The upper casing section 203 has a shoulder 232 which has a series of through bores 234 each of which registers with one of the threaded blind bores 228 in the ring 224. Threaded studs 236 are fitted in each of the bores.

Each stud 236 has a lower end which screws into one of the blind bores 228. A nut 238 is threaded onto the stud, and a thrust plate 240 with a washer 249 lies above the nut. The upper casing section 203 is then placed over the upstanding part of the stud, and a further nut 242 is threaded onto the top of the stud.

In use, the nuts 242 can be tightened to draw the casing section 203 and its tapered surface 207 down onto the tapered surface 206 of the clamp component 218, to clamp a tube 300. It will be seen from Figure 7 that the positions of the nuts 238 determine the extent to which the tapered surface 207 of the casing section 203 can be drawn down onto the tapered section 206 of the clamp component 218, and thus determines the clamping force which can be applied to the tube 300. However the positions of the nuts 238 relative to the lower casing section 230 can be altered by turning the nuts on the threads of the studs 236.

The nuts 238 can also be used to release the clamp. To do this, the upper nuts 242 are slackened off, and a tool is used to turn the nuts 236 so that they lift the upper casing section 203 to reduce the engagement between the surfaces 206 and 207. The presence of the thrust plate 240 and washers 249 makes it possible to turn the nuts 238 when they are under load.

Figure 7 also shows a fixed end stop 244, which provides the ultimate limit to relative axial movement between the tapered surfaces, and annular seals 246 and 248 between the separate clamp component 218 and the upper casing section 203.

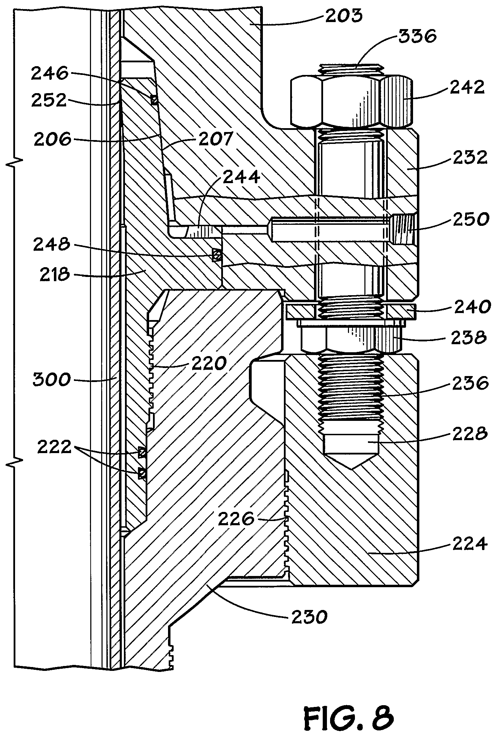

Figure 8 shows the arrangement of Figure 7, but with the clamp fully tightened up to the stop 244. It will be seen that there is clamping contact between the component 218 and the casing 300 at 252. The view shown in Figure 8 is taken at a different point around the casing circumference, and shows a monitoring port 250 which communicates with the gap between the clamp component 218 and the uppercasing section 203.

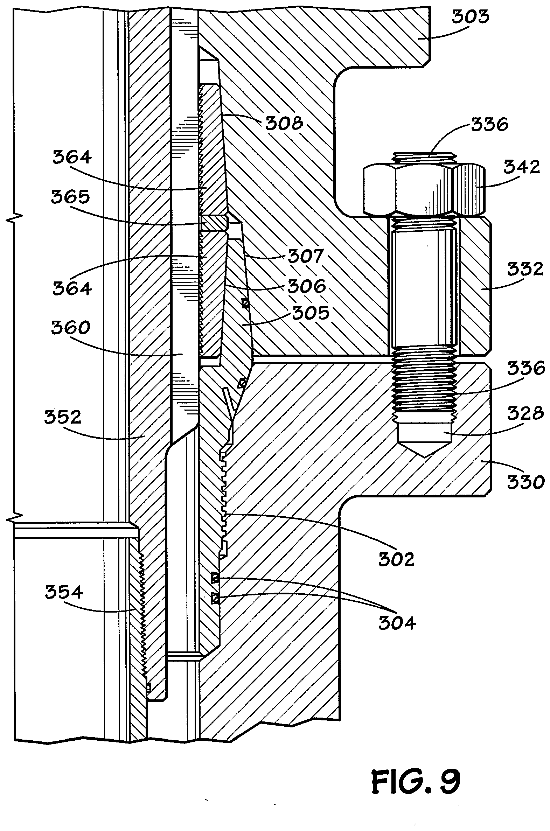

Figure 9 shows an embodiment which combines features from earlier described embodiments.

In Figure 9, a casing hanger 352 is to be clamped within an upper casing section 303 and a lower casing section 330. The hanger 352 has a flow-by passage 360, and has a casing 354 threaded to its lower end.

Two compression rings 364 (each similar to one half of the ring 64 of Figure 4) separated by a plain ring 365 are retained within a correspondingly shaped annular, internal recess formed by the upper and lower section 303, 330. Also within this recess is an annular sleeve 301. The sleeve 301 is threaded at 302 onto a corresponding internal thread on the section 330. Seals 304 are provided to seal between the sleeve and the section 330.

The sleeve 301 has an upper region 305 which has both an internally tapered surface 306 and an externally tapered surface. The upper section 303 has an upper internally tapered surface 308 and a lower internally tapered surface 307.

When the components are assembled as shown in Figure 9, tightening of the nuts 342 (of which there will be several around the circumference) draws the upper section 303 towards the lower section 330. This will cause all the tapering surfaces to ride over one another.

The surface 308 of the upper section 303 will ride over the upper compression ring 364 and will compress the ring inwardly.

The surface 307 of the upper section 303 will ride over the upper part of the sleeve 301 and will compress the sleeve inwardly.

At the same time, the upper part of the sleeve 301 will be driven into the tapering gap between the lower one of the compression rings 364 and the upper section 303, and this will cause the lower compression ring to be compressed radially inwards, to grip the casing hanger 352, at whatever part of the hanger lies within the circumference of the rings 364.

In this embodiment, metal/metal seals exist between the surfaces of the upper and lower sections, the compression rings 364 and the sleeve 301. The surfaces of the compression rings which will make contact with the hanger 352 can be ribbed or serrated, in order to enhance the grip of the rings on the hanger. The compression ring could be made from a single component with two oppositely tapered surfaces, instead of the construction described above.

The clamping/clamping system described here is easy and simple to operate and allows the parts of the clamp to be held apart, against gravitational influences, until the components to be clamped are in their correct relative positions. It also allows the clamp to be easily opened and closed to allow adjustment of relative axial positions.

As previously described, the clamping arrangement of the present application uses mechanical force to create a gripping force on the pipe. Specifically, a plurality of nuts are typically tightened to draw a corresponding pair of tapers together thereby causing deflection of the outer casing and subsequent gripping of the inner casing. It should be understood that any mechanism or method may be used to cause deflection of the outer casing sufficient to create a gripping or clamping force to be exerted on the inner casing.

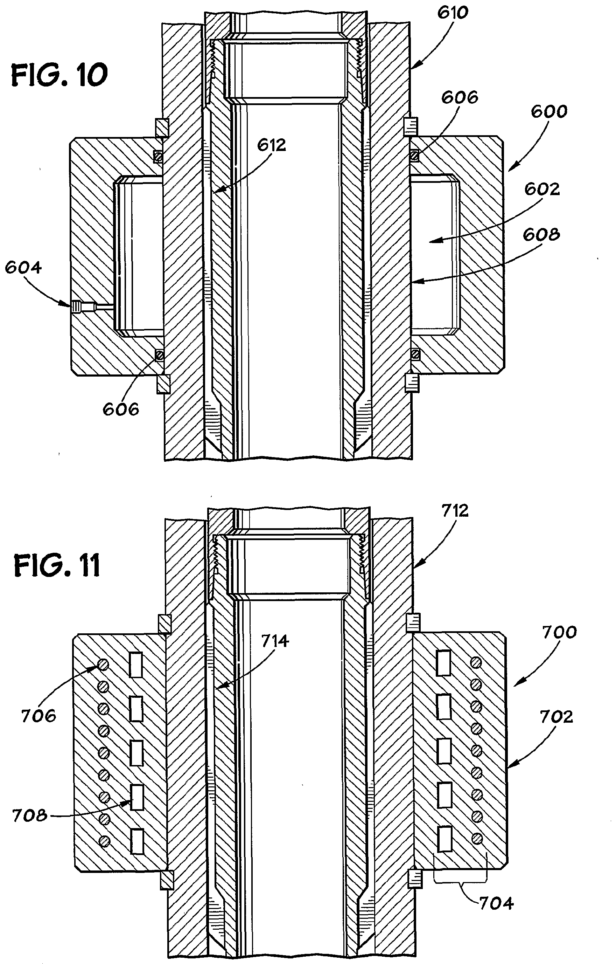

In one embodiment, a hydraulic force may be used to create a clamping force. Figure 10, shows a preferred hydraulic clamping arrangement 600. The hydraulic clamping arrangement 600 includes a hydraulic chamber 602, inlet port 604 and seals 606. The chamber 602 is configured such that one side 608 of the chamber is formed by the outer casing 610. The remaining sides of the chamber are formed such that the chamber forms a continuous loop or circle around the riser. A hydraulic fluid may be introduced into the chamber through port 604. The seals 606 prevent escape or leakage of the fluid once it has been introduced into the chamber and thereby maintain pressure within the chamber. As the pressure in the chamber is increased, either by introduction of an increased volume of fluid or through expansion of a substance present in the chamber, the side 608 is deflected to create a gripping or clamping force between it and the inner casing or hanger 612. By selection of the hydraulic fluid and use of monitoring equipment, such as pressure gauges, strain gauges and the like, the specific force exerted by the fluid on the outer casing 610 may be precisely controlled to create a specific amount or degree of deflection. Any suitable fluid may be used, however, concrete, plastic, or a similar fluid is preferable because it can be supplied at a relatively low pressure into the chamber, at which point it may expand to create a hydraulic force to cause deflection of the outer casing. Additionally, concrete hardens over time, thereby maintain pressure in the chamber without reliance on the seals, which otherwise would require replacement over time.

In another embodiment and as shown in Fig. 11, the force required for clamping or gripping may be formed through the use of thermal expansion and/or contraction. A heating system 700 may incorporate a heating unit or body 702 which may contain any number of heating elements 704. The heating elements may be of any suitable type, but are preferably heating coils 706 or heating conduits 708. As with the other clamping arrangements, previously described, the heating system 700 is positioned around and in close proximity or in contact with the outer casing 712. Once in position, and prior to insertion of the inner casing or hanger 714, the outer casing 712 is heated using thermal energy provided via the heating elements 706 or the heating conduits 708. Any suitable method or mechanism may be used to provide the thermal energy. Typically, the heating elements 706 convert electrical power into thermal energy, thereby providing the heat needed. Any number of suitable fluids may be used to supply thermal energy via the heating conduits, for example, steam or a heated liquid may be passed through the conduits. As the thermal energy is passed from the system 700 into the outer casing, the outer casing expands. After sufficient expansion, the inner casing or hanger 714 may be passed through the outer casing 712 and properly positioned. Once the hanger is in place, the system is allowed to cool, either through simple dissipation of heat in the system or by passing a cooling medium through the system, such as through the conduits. As the outer casing cools, it shrinks toward it's original diameter. By selecting a hanger with an external diameter slightly larger the inner diameter of the outer casing at ambient temperature, a gripping or clamping force may be created by the outer casing on the hanger.

The clamping system herein described may be used in a relatively large number of applications, some of which may include additional material or mechanisms or may include alternate configurations of the clamping system. It should be understood that any number of combinations and uses may be found for the present application.

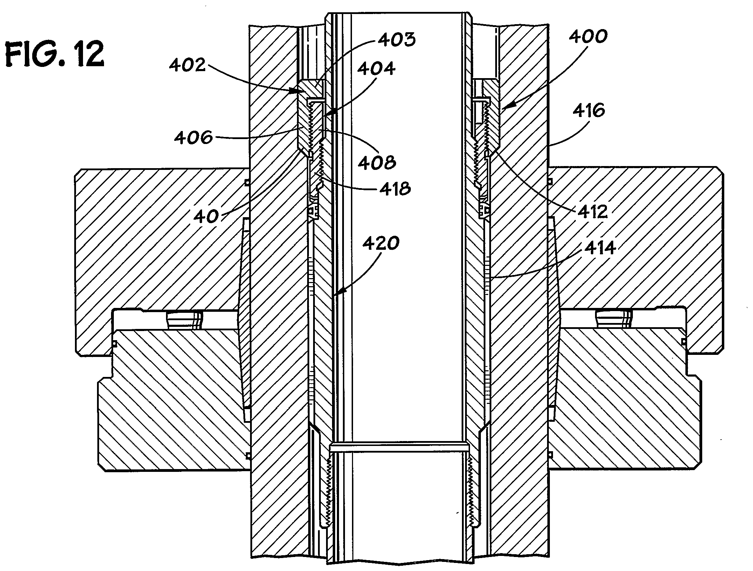

For instance and as shown in Fig. 12, the clamping system previously described may further include a locking system to prevent substantial movement of the hanger in the event that the clamping system loses grip. Typically, such a locking system is provided as a safety device, although other uses are possible. The locking system 400 includes an outer member 402 capable of engaging an inner member 404. The outer member 402 has a lower threaded portion 406 for engaging a similarly threaded upper threaded portion 408 of the inner member 404. The outer member may also include an upper, running profile portion 403 for enabling the installation of the locking system 400 by the engagement of a running tool not shown. The lower portion 406 of the outer member preferably has a tapered shoulder 410 for engaging a similarly tapered shoulder 412 on the inner surface 414 of the outer casing or riser 416. The inner member has a threaded upper portion 408 for engaging the outer member and a threaded lower portion 418 for engaging a similarly threaded portion on the hangar 420. By including threaded portions on both the inner and outer members, as well as on the hanger, the locking system may be axially adjusted as needed. Typically, the outer member will be adjusted so that the shoulder 410 is in contact or immediately above the riser shoulder 412. Thus, if the gripping system should fail or otherwise loose grip, the two shoulder areas will engage to prevent axial downward movement of the hanger. Although the locking system is typically located above the gripping system, as shown in Figure 12, it may be positioned in any suitable location.

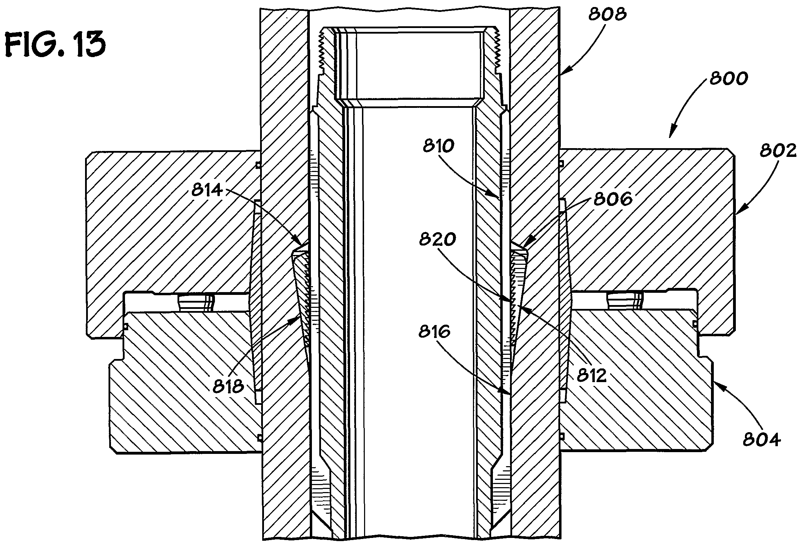

In yet another embodiment, slip segments may be used in conjunction with the clamping arrangement to provide additional safety or backup features. As shown in Fig. 13, the clamping system 800 includes an upper clamping ring or component 802 and a lower clamping ring or component 804 which are drawn together using a threaded bolt, for instance, or any other suitable method or mechanism, as has been previously described. A notch or groove 806 may be formed in the outer casing 810 or alternatively, in the hanger 810 (groove in hanger not shown), the groove having a angled or substantially triangular shape, such that a substantially shorter side 814 is angled outward from the inner surface 816 of the outer casing 808. A second substantially longer side 818 is angled downward and inward. An annular wedge or slip segment 812 may be disposed in the groove 806. The slip segment 812 is typically triangular or wedge shaped, corresponding generally to the shape of the groove, but being somewhat smaller overall. Due to the greater size of the groove 806, the slip segment 812 may slide axially in the groove between an initial or installed position and a safety or engaged position, as shown in Fig. 13. The slip segment is installed into the groove prior to moving the hanger into place. The slip segment is typically maintained in an upper, initial position by a shear pin or similar structure. Once the hanger is installed and clamped or gripping, the slip segment is maintained in the initial position until there is a loss of clamping force. Once the hanger 806 begins to move axially downward in relation to the outer casing 808, the shear pin will separate, leaving the slip segment free to move axially downward. Due to the inwardly sloped side 818 of the groove 806, the slip segment 812 is forced inward and into contact with the inner casing 810, forming a mechanical gripping force there between, which increases with greater axial movement of the inner casing 810 and slip segment 812. Preferably, the inner surface 820 of the slip segment is provided with notches or teeth to better grip the inner casing. Although described with particularity, it should be understood that the groove and slip segment may be of any suitable size and shape.

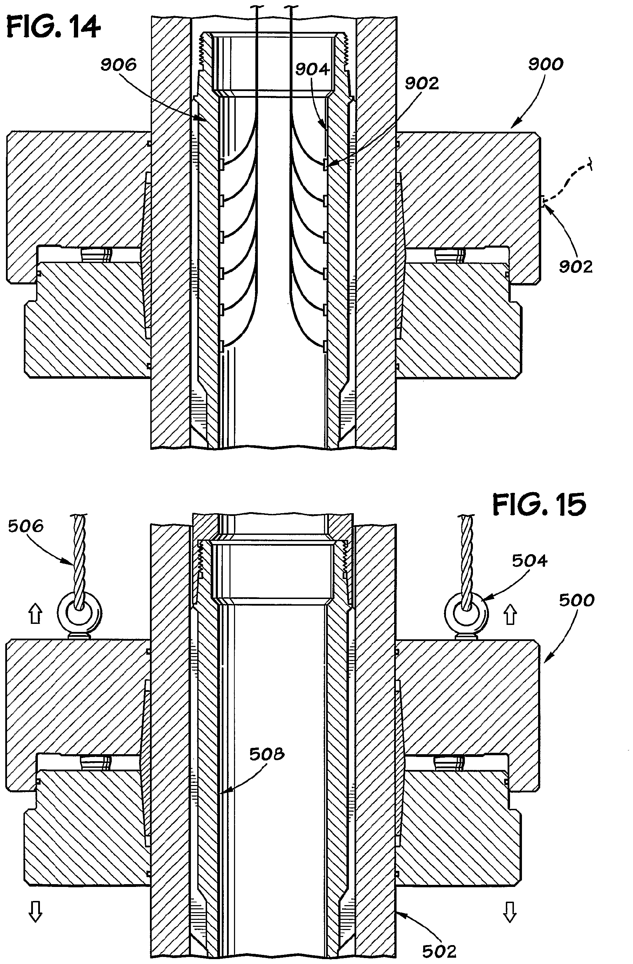

It is useful in many cases where the clamping arrangement of the present application is used to be able to monitor on a real time basis the amount of clamping force being provided. This is important initially to prevent the use of an excessive amount of force which may plastically deflect the outer casing, where such action is not desired, for instance. It is also useful in determining if the system is losing clamping force while in operation. As shown in Fig. 14, a plurality of strain gauges 902 may be used to monitor the clamping force exerted by the clamping arrangement 900 at any given time. Preferably, each strain gauge provides data to a monitoring system which then allows operators to determine the status of the system. Typically, the strain gauges are located on the inner surface 904 of the hanger 906. By placing gauges 902 at intervals along the length of the clamping area, operators can monitor not only the overall gripping force being exerted, but also the force being exerted at a particular location. In an alternate embodiment, one or a plurality of strain gauges may be located on the outside of the clamping arrangement. Regardless of the location, the gauges may prevent inadvertent or unknowing failure of the clamping arrangement by detecting decreases in gripping strength prior to loss of grip between the outer casing and the hanger.

A significant problem in some wells, especially deeper wells, is the inability of operators to predict the exact location of the hanger after the casing has been run. Due to production tolerances and the relatively large number of joints required for deep wells, space out becomes a problem. The present application may be modified to alleviate this problem. As shown in Figure 15, the clamping arrangement 500 may be mounted in such a way to allow it to move or slide along the length of the outer casing 502. Any suitable mechanism may be employed to allow movement, in one embodiment, a plurality of hooks or loops 504 may be attached to the clamping arrangement so that it can be raised and lowered using rope, chain or cable 506. By allowing the clamping arrangement to move axially, the inner casing is more easily spaced out because precise location of the hanger 508 is not required. Clamping force may be provided as previously described and is not affected by movement of the arrangement.

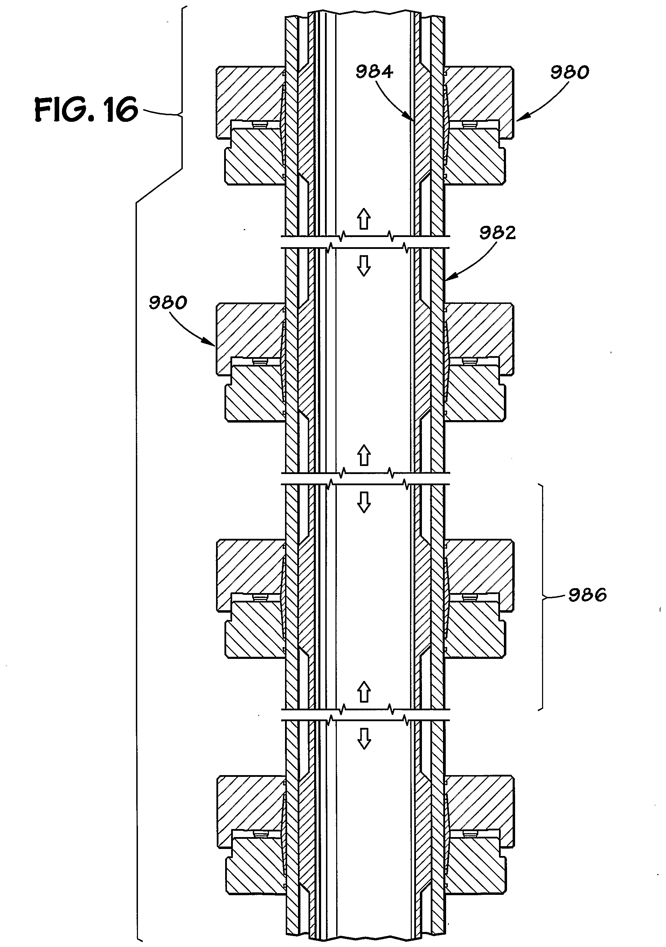

Yet another problem, especially in deep water wells, is that either tension or compression may build up along the concentric strings, thereby causing problems in the capacity of a system limiting its capability in respect of the length of the concentric risers. The present application may be used to alleviate such problems. Similarly, it may be desirable in certain instances to create tension or compression between inner and outer strings or a part thereof. As shown in Fig. 16, a plurality of clamping arrangements 980 may be employed to accomplish these goals. The clamping arrangements 980 may be arranged or positioned at intervals along the length of the string. The area or segment 986 between each clamping arrangement may then be separately controlled and changed for the specific needs of the particular string by clamping or gripping the casing at a predetermined location. The tension or compression in a particular segment 986 can this way be incrementally controlled. Typically at least some number of clamping arrangements will be located subsurface, however, the arrangements may be located in any suitable position. Typically, a clamping arrangement 980 is positioned around the riser or outer casing 982, as previously described. The inner casing 984 may be of any suitable type for use in the present application, but is preferably a special segment having thickened walls, such as found in hangers.

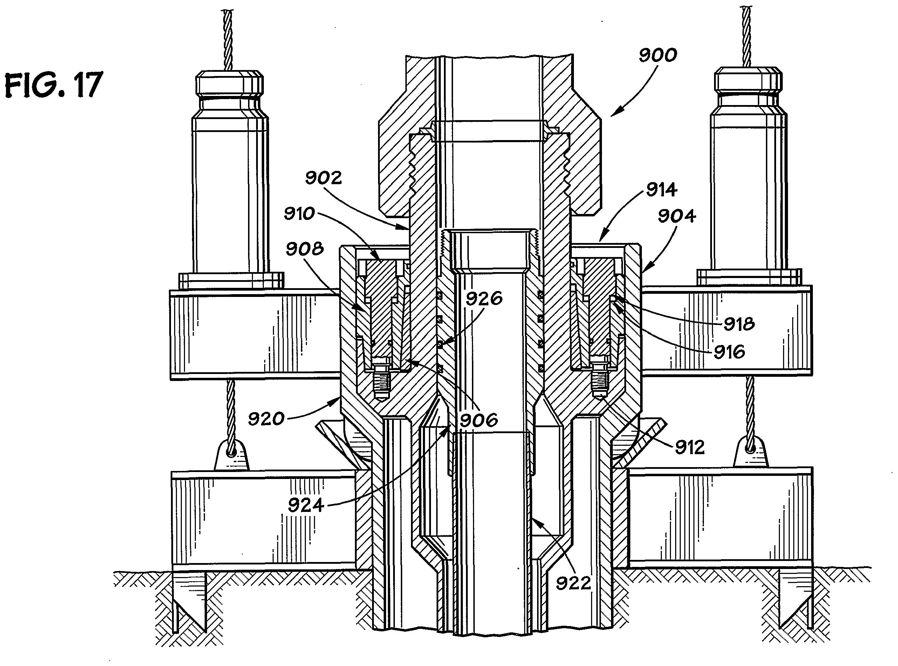

A common problem encountered in completing a subsea wellhead is the inability to properly control the tension in the casing after the subsea casing hanger has been landed on its shoulder in the Subsea wellhead. Currently, the casing tension is provided only by the residual load between the Subsea casing hanger and its running tool just prior to landing in the subsea wellhead. This method is relatively imprecise because the casing weight can be significantly or sometimes totally dissipated by differential sticking of the casing string in the hole. By incorporating a clamping arrangement of the present application into the subset wellhead, a precise amount of tension may be added to the casing. As shown in Fig. 17, the present application may be modified for use in a subset wellhead 900. Typically, an outer casing or wellhead 902 is anchored to the sea floor. Preferably, the clamping arrangement 904 is incorporated into the outer casing or wellhead 902 itself, as shown in Fig. 17, however, it may be a separate assembly, as previously described. An externally tapered annular sleeve 906 is located around the outer casing or wellhead 902. An annular component 908 having a plurality of bores or holes 914 there through is positioned substantially around and outside the sleeve 906. Each bore has a shoulder 916 formed therein, for the purpose creating a piston area between seal sets 928, which is used to hydraulically tension the system and ultimately retaining a fastener. The annular component 908 has a corresponding externally tapered surface for engaging the sleeve 906. The outer casing or wellhead is preferably adapted for receiving threaded bolts, screws or other suitable fasteners 910 into correspondingly threaded bores 912 formed therein. The bolts preferably have a flange 918 capable of engaging the shoulder 916 of the holes 914. The hole 914 corresponds generally to the threaded bore 912 such that the bolt 910 may pass through the holes 914 and engage the bore 912. As the bolt 910 engages the threaded bore 912, an annular pocket area is created between the flange 918 and shoulder 916. When hydraulic fluid is introduced in the annular pocket area under sufficient pressure, the effect is that the annular component 908 is pushed downward. This downward movement causes the corresponding tapered surfaces of the annular component and the sleeve to engage and create a clamping force which is directed inwardly and which will deflect the outer casing or wellhead bore inwardly as well. Simultaneously to deflecting the outer casing or wellhead bore inwards the lower section 930 of the annular component 908 flares a lower rim 932 on outer casing or wellhead 902 outwards so as to friction lock the outer casing or wellhead 902 into the conductor receptacle 920. As the inner casing 922 and hanger 924 are moved into location, prior to any clamping force being exerted, the casing 922 is typically cemented or otherwise affixed in the well bore. It is often desirable to have a certain degree of tension in the inner casing after it has been cemented. Using the prior art methods of shoulders or slips, is impossible to achieve in subsea wellhead applications. Thepresent application, however, allows the inner casing 922 to be positioned below it's final position, in a wider section of the outer casing or wellhead 902, where the fluid returns generated, while the inner casing 922 is cemented in, can flow past the casing hanger 924. Once the cement has set the casing 922 can be stretched upwards into position using the casing running string. This creates tension in the casing 922. By pulling the casing 922 up a predetermined distance, or by using suitable measuring equipment, tension in the casing 922 may be set relatively precisely. Once the casing 922 and hanger 924 are pulled into position, hydraulic pressure is remotely introduced in the annular pockets between the seal sets 928, thereby generating a clamping force between the bore of the outer casing 902 and the outer surface of the casing hanger 924, for maintaining the position of the hanger 924 and casing 922. A secondary effect of the gripping action of the outer casing or wellhead bore on the casing hanger is to compress a number of annular seals 926, so as to seal the casing hanger outer diameter against the inner bore of the outer casing or wellhead 902.

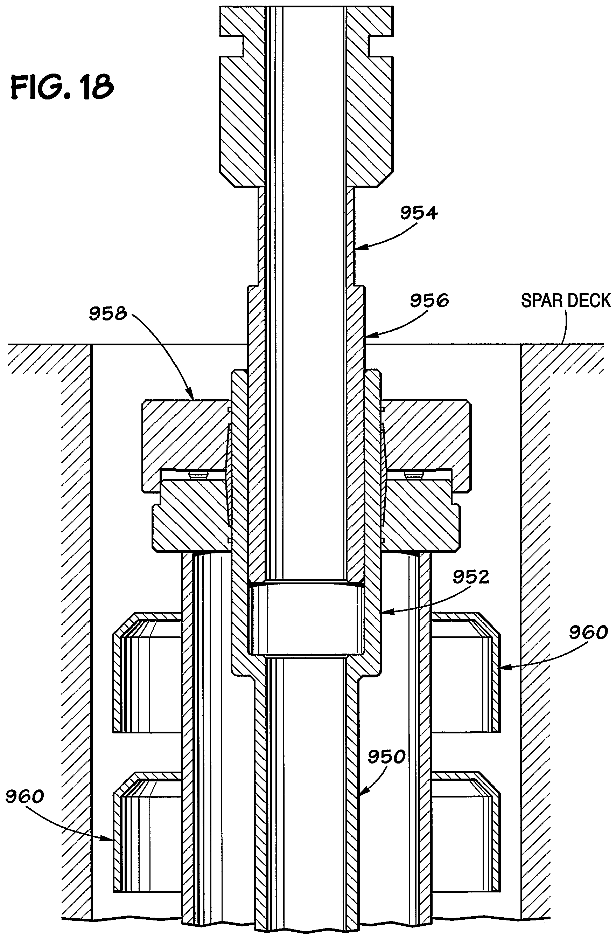

As with the inner casing, it is often difficult to predict the precise terminating location of the outer riser at the surface, especially in deep water wells. Due to production tolerances in the joints and the fact that the riser it typically landed on a fixed shoulder at the subset wellhead, shakeout of the outer riser typically involves having to cut the riser to the desired length once it has been completely installed. This procedure is time consuming and expensive. Figure 18 shows a first riser segment 950 which incorporates a receiving area 952 having an increased inner diameter. A second riser segment 954 has a lower end 956 which has an outer diameter slightly smaller than the inner diameter of the receiving area 952 of the first riser segment 950. Additionally a larger diameter pipe section 962 is shown onto which inverted air cans 960 are affixed. The air cans are used to impart upward tension to the first riser segment 954, to counter act the weight of the riser segment which reaches all the way to the ocean floor. The, so called, tensioner riser 960 and 962 is at its upper end permanently affixed to a clamping arrangement 958. The relative positions, with respect of the deck 968, of the tensioner riser clamping arrangement 958, as indicated by X 964 and of the top of the terminating wellhead 970, as indicated by Y 966, are important to the eventual layout of the production facility. Thepresent application may be used to more quickly and easily space out the clamping assembly 958 and the wellhead 970. Following installation and temporary suspension of the tensioner riser 962 and 960 from the deck 968, the first riser segment 950 is installed through the temporary suspended clamp assembly 958. The receiving area 952 is configured of sufficient length to insure that at least a section of the receiving area 952, of equivalent length to the claiming assembly 958 is located in the clamping assembly, this notwithstanding the fact that production tolerances will cause the first riser section 950 to be of uncertain length. Subsequently, the lower end 956 of the second riser segment 954 may be positioned into the receiving area 952 of the first riser segment 950. Depending on the length of the lower end, a relatively large degree of adjustability may be achieved. Once the lower end 956 and the receiving end 952 are properly aligned, the clamping arrangement 958 disposed around the receiving area 952 may be used to provide a clamping force against the receiving end, thereby attaching the tensioned riser 960 and 962 to the outer diameter of the first riser segment 950 and clamping the lower end 956 of the second riser segment 954 in the receiving end 952. The lower end 956 of the second riser segment 954 may have thickened walls to provide extra strength and to enable application of sufficient friction force.

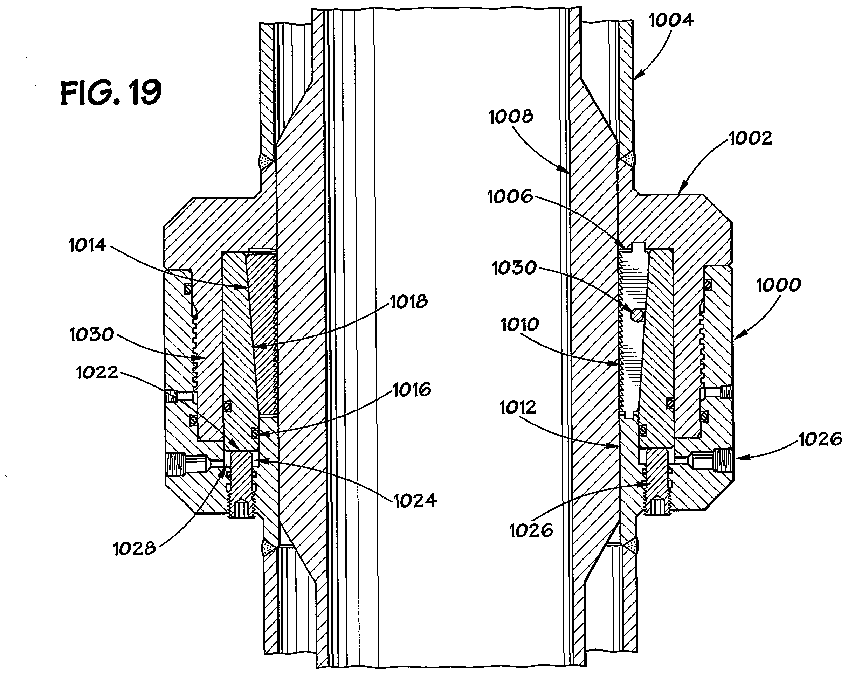

Although the previous embodiments of the present application show a clamping arrangement positioned externally of an outer pipe or tubular member, it should be understood that the clamping arrangement may be located in any suitable position for clamping or gripping the inner pipe. For instance, and as shown in Fig. 19, the clamping arrangement 1000 may comprise a housing 1002 which may be integrated into an outer pipe or casing 1004. An inner annular, tapered clamping segment or ring 1006 is positioned in contact with an inner casing hanger 1008 or similar structure which must be clamped or gripped. The clamping ring preferably has an inner surface 1010 which is substantially parallel to the outer surface 1012 of the hanger 1008 and a tapered outer surface 1014. An outer annular tapered clamping segment or ring 1016 is positioned radially outwardly of the first ring 1006 and has a tapered inner surface 1018 which corresponds to and is in contact with the tapered outer surface of the first ring 1014 and an outer surface 1020 which is preferably substantially parallel to the hanger 1008. The housing 1002 is formed such that the lower or bottom surface 1022 forms the upper surface or roof of a pressure chamber 1024. The pressure chamber includes a port 1026 for introducing a hydraulic fluid into the chamber 1024. Preferably, the chamber also includes a bolt or screw 1026 extending through the floor 1028 of the chamber 1024. As fluid is introduced into the chamber 1024, the outer tapered ring 1016 is pushed axially upward. As the outer ring 1016 moves, the corresponding tapered inner surface 1018 and tapered outer surface 1014 cause an inward deflection of the inner ring 1006 thereby causing a gripping or clamping force to be exerted by the inner ring 1006 against the hanger 1008. A retaining structure or ring 1030, which is preferably prevents outward movement of the outer ring 1016. Once the outer ring 1016 has been moved far enough to create a sufficient clamping force, the bolt 1026 may be threaded through the floor 1028 of the chamber 1024 and positioned against the bottom surface 1022 of the outer ring 1016, thereby creating a mechanical stop or lock to prevent downward axial movement of the outer ring, even if pressure in the chamber is lost or decreased. The inner ring 1008 may be formed from a plurality of independent sections or may be a single, continuous ring. Where the inner ring 1008 is formed of sections, aband or o-ring 1030 may located around the outer surface 1014 of each sections to aid in retaining the sections in place during use.

## Claims

1. A clamp arrangement for concentric well casings comprising:
a releasable clamp for clamping concentric well casings, and
a smaller inner well casing (420, 52) having inner and outer walls and of a first outer diameter within a larger outer well casing (416, 50) having a central axis and inner and outer walls of a second, larger internal diameter,
the releasable clamp comprising:
a. a compression ring (64) having an inner surface for peripherally surrounding and engaging the outer wall of the larger outer well casing (416, 50) and having an external surface which is conically tapered relative to the axis;
b. a compression collar (70) in communication with the compression ring (64) for generating forces within the reaches of the compression ring (64), the smaller inner well casing (420, 52) being securable and engageable within the larger outer well casing (416, 50) by a reduction in the inner diameter of the larger outer well casing (416, 50) caused by said forces, and the smaller inner well casing (420, 52) being disengageable by a release of said forces, the compression collar (70) having an internal tapered surface, the compression collar (70) being positioned in axial alignment with the compression ring (64) and in peripheral relationship therewith, whereby axial movement of the compression collar (70) relative to the compression ring (64) results in the application of a radial compression force on the compression ring (64) for forcibly distorting the compression ring (64) into the outer wall of the larger outer well casing (416, 50), forcing the inner wall of the larger outer well casing (416, 50) radially inward for providing a gripping force for clamping and securing the inner well casing (420, 52);
**characterised in that** the releasable clamp further comprises a mechanical locking device (400) positioned within the larger outer well casing (416, 50) which positively engages and locks the smaller inner well casing (420, 52) in position.

2. The clamp of claim 1, wherein the locking device (400) is arranged, in use, to prevent substantial movement of the smaller inner well casing (420, 52) in the event that the force between the inner diameter of the larger outer well casing (416, 50) and the smaller inner well casing (420, 52) loses grip.

3. The clamp of claim 1 or claim 2, wherein the locking device (400) comprises an outer member (402) capable of engaging an inner member (404).

4. The clamp of claim 3, wherein a lower portion of the outer member (402) comprises a tapered shoulder (412) for engaging a tapered shoulder (410) on the inner surface of the larger outer well casing (416, 50).

5. The clamp of claim 3 or claim 4, wherein the inner member (404) has a threaded upper portion (418) for engaging a similarly threaded portion on the smaller inner well casing (420, 52).

6. The clamp of any preceding claim, wherein the locking device (400) is axially adjustable.

7. The clamp of claim 6, wherein an outer member (402) is adjusted so that a shoulder (410) is in contact or immediately above a shoulder (412) of the larger outer well casing (416, 50).

8. The clamp of claim 1, wherein the locking device (400) comprises an annular wedge or slip segment (812) disposed in a groove (806) formed in the outer well casing (808, 50).

9. The clamp of claim 8, wherein the groove (806) is a substantially triangular shape.

10. The clamp of claim 8 or claim 9, wherein the annular wedge or slip segment (812) is axially slidable in the groove (806).

11. The clamp of any one of claim 8 to claim 10, wherein an inner surface (820) of the annular wedge or slip segment (812) is provided with notches or teeth to better grip the smaller inner well casing (810, 52).

12. The clamp of any preceding claim, wherein the clamping device is non-invasive.

13. The clamp of any preceding claim, further including an axial tightening system for moving the compression collar (70) axially relative to the compression ring (64).

14. The clamp of any preceding claim, including a device for holding the compression ring (64) in axial position relative to the compression collar (70).

15. The clamp of claim 14, wherein the device comprises a spacer ring (12).

16. The clamp of claim 14, wherein the compression ring (64) comprises a sleeve (1) having a cylindrical, externally threaded portion and wherein the spacer ring (12) includes internal threads mated with the threaded sleeve portion.

17. The clamp of claim 15, wherein the spacer ring (12) is removable.

18. The clamp of any preceding claim, wherein the smaller inner well casing (52) is a casing hanger for supporting a casing (54) in a well.

19. The clamp of claim 13, further including an hydraulically extendable annular ram associated with the compression collar (70) for moving the compression collar (70) relative to the compression ring (64).

20. The clamp of claim 19, the ram further comprising a seal between the compression ring (64) and the compression collar (70).

21. The clamp of any preceding claim, wherein the axis of the clamping arrangement is vertical.

22. The clamp of any preceding claim, further including radially extending bolts (102) extending through threaded bores in the compression collar (70) and directed axially toward the compression ring (64).

23. The clamp of claim 22, wherein each of said bolts (102) having an end comprising a tapered dog (8), and recesses (11) around the larger outer well casing (50), the recesses (11) having inclined flanks and being positioned so that when the bolts (102) are advanced into the recesses (11), the dogs (8) first make contact with the inclined flanks and thereafter draw the compression collar (70) inward towards the compression ring (64).

24. The clamp of any preceding claim, wherein an internal bore of the larger outer well casing (50) has a constant internal diameter.

25. The clamp of any preceding claim, wherein the compression ring (64) is located between the larger diameter outer well casing (50) and the compression collar (70).

26. The clamp of any preceding claim, wherein the outer well casing (50) is stress relieved to reduce hoop stresses.

27. The clamp of claim 26, wherein the stress relieving mechanism is a plurality of angularly spaced slots (882, 884) in the outer well casing (50).

28. The clamp of claim 27, including slots (884) in the inner wall of the outer well casing (70).

29. The clamp of claim 28, including slots (882) in the outer wall of the outer well casing (70).

30. The clamp of claim 1, wherein the compression ring (64) and the compression collar (70) are selectively movable along the axis of the larger outer well casing (50).

31. The clamp of claim 30, further including a holding device for securing the compression ring (64) and compression collar (70) in the selected position.

32. The clamp of any preceding claim, wherein the larger outer well casing (50) includes a radially extending portion for supporting the compression ring (64) and wherein the compression collar (70) is positioned above the radially extending portion and in peripheral surrounding engagement with the compression ring (64).

33. The clamp of claim 32, the radially extending portion including a threaded bore and the compression collar (70) including a clearance bore in axial alignment with the threaded bore, the clamp further including a threaded mounting bolt passing through the clearance bore and having a head adapted for engaging the compression collar (70), whereby advancement of the bolt into the bore moves the compression collar (70) relative to the compression ring (64).

34. The clamp of claim 1, further including a seal between the smaller inner well casing (52) and the larger outer well casing (50).

35. The clamp of claim 1, including a strain gauge (902) on the interior wall (904) of the smaller inner well casing (906, 52).

36. The clamp of claim 1, further comprising a plurality of clamp assemblies (980) positioned in axially spaced relationship along the outer periphery of the larger outer well casing (982, 50).

37. The clamp of claim 1, further comprising a plurality of rings axially spaced and mounted on the periphery of the larger outer well casing.

38. A method for clamping a smaller inner well casing (420, 52) within a concentric larger outer well casing (416, 50), the method comprising the steps of:
a. placing the smaller inner well casing (420, 52) within the larger outer well casing (416, 50);
b. exerting a radially inward force on the exterior of the larger outer well casing (416, 50) such that the larger outer well casing (416, 50) flexes inward slightly to clamp the smaller inner well casing (420, 52);
c. releasing the radially inward forces so that the larger outer well casing (416, 50) releases the smaller inner well casing (420, 52); and
**characterised by** providing a mechanical locking device (400) positioned within the larger outer well casing (416, 50) which is arranged, is use, to positively engage and lock the smaller inner well casing (420, 52) in position.

39. The method of claim 38 wherein the radially inward force is applied by communicating hydraulic fluid into a chamber (602) formed between the larger outer well casing (416, 50) and a compression ring (64) mounted on the larger outer well casing (416, 50).

40. The method of claim 38 wherein the radially inward force is applied by moving a tapered compression collar (70) relative to a tapered compression ring (64) attached to the larger outer well casing (416, 50).

41. The method of claim 40 wherein the compression collar (70) is moved by activating a hydraulically extendable annular ram.

42. The method of claim 40 wherein the compression collar (70) is moved by rotating threaded fasteners associated with the compression collar (70).

43. The method of claim 38 wherein a compression ring (64) is first moved to a desired location along the larger outer well casing (416, 50), and then used to apply the radially inward force.

## Patentansprüche

1. Klemmanordnung für konzentrische Bohrlochverrohrungen, umfassend:
eine lösbare Klemme zum Klemmen von konzentrischen Bohrlochverrohrungen, und
eine kleinere innere Bohrlochverrohrung (420, 52) mit Innenwänden und Außenwänden und mit einem ersten Außendurchmesser innerhalb einer größeren äußeren Bohrlochverrohrung (416, 50) mit einer Mittelachse und einer Innenwand und einer Außenwand mit einem zweiten größeren Innendurchmesser,
wobei die lösbare Klemme folgendes umfasst:
a. einen Kompressionsring (64) mit einer Innenfläche zum Umgeben und Zusammengreifen mit der Außenwand der größeren äußeren Bohrlochverrohrung (416, 50) und mit einer Außenfläche, welche sich relativ zu der Achse konisch verjüngt;
b. einen Kompressionskragen (70), der mit dem Kompressionsring (64) kommuniziert, um Kräfte innerhalb der Reichweite des Kompressionsrings (64) zu erzeugen, wobei die kleinere innere Bohrlochverrohrung (420, 52) innerhalb der größeren äußeren Bohrlochverrohrung (416, 50) durch die infolge der Kräfte hervorgerufene Verringerung des Innendurchmessers der größeren äußeren Bohrlochverrohrung (416, 50) sicherbar und in Eingriff bringbar ist, und wobei die kleinere innere Bohrlochverrohrung (420, 52) durch Lösen dieser Kräfte außer Eingriff bringbar ist, wobei der Kompressionskragen (70) eine innere sich verjüngen Fläche aufweist, wobei der Kompressionskragen (70) in axialer Flucht mit dem Kompressionsring (64) und mit diesem in Umfangslagebeziehung ausgerichtet ist, wodurch die axiale Bewegung des Kompressionskragens (70) relativ zum Kompressionsring (64) dazu führt, dass auf den Kompressionsring (64) eine radiale Kompressionskraft ausgeübt wird, um den Kompressionsring (64) unter Krafteinfluss in die Außenwand der größeren äußeren Bohrlochverrohrung (416, 50) zu verdrängen, wobei die Innenwand der größeren äußeren Bohrlochverrohrung (416, 50) radial nach innen gedrückt wird, um eine Greifkraft zum Klemmen und Sichern der inneren Bohrlochverrohrung (420, 52) zu erreichen;
**dadurch gekennzeichnet,**
**dass** die lösbare Klemme weiter eine mechanische Verriegelungseinrichtung (400) innerhalb der größeren äußeren Bohrlochverrohrung (416, 50) umfasst, welche aktiv mit der kleineren inneren Bohrlochverrohrung (420, 52) zusammengreift und diese in einer Position arretiert.

2. Klemme nach Anspruch 1,
bei welcher die Verriegelungseinrichtung (400) so eingerichtet ist, dass sie bei Gebrauch eine wesentliche Bewegung der kleineren inneren Bohrlochverrohrung (420, 52) in dem Fall verhindert, dass sich der Griff zwischen dem Innendurchmesser der größeren äußeren Bohrlochverrohrung (416, 50) und der kleineren inneren Bohrlochverrohrung (420, 52) löst.

3. Klemme nach Anspruch 1 oder Anspruch 2,
bei welcher die Verriegelungseinrichtung (400) ein äußeres Element (402) umfasst, welches mit einem inneren Element (404) zusammengreifen kann.

4. Klemme nach Anspruch 3,
bei welcher ein unterer Abschnitt des äußeren Elements (402) eine sich verjüngende Schulter (412) umfasst, um mit einer sich verjüngenden Schulter (410) an der Innenfläche der größeren äußeren Bohrlochverrohrung (416, 50) zusammenzugreifen.

5. Klemme nach Anspruch 3 oder Anspruch 4,
bei welcher das innere Element (404) einen mit Gewinde versehenen oberen Abschnitt (418) umfasst, um mit einem auf ähnliche Weise mit einem Gewinde versehenen Abschnitt auf der kleineren inneren Bohrlochverrohrung (420, 52) zusammenzugreifen.

6. Klemme nach einem der vorigen Ansprüche,
bei welcher die Verriegelungseinrichtung (400) in axialer Richtung einstellbar ist.

7. Klemme nach Anspruch 6,
bei welcher ein äußeres Element (402) so eingestellt ist, dass eine Schulter (410) sich in Kontakt mit oder unmittelbar oberhalb der Schulter (412) der größeren äußeren Bohrlochverrohrung (416, 50) befindet.

8. Klemme nach Anspruch 1,
bei welcher die Verriegelungseinrichtung (400) ein ringförmiges Keil- oder Gleitsegment (812) umfasst, welches in einer Rille (806) angeordnet ist, welche in der äußeren Bohrlochverrohrung (808, 50) ausgebildet ist.

9. Klemme nach Anspruch 8,
bei welcher die Rille (806) eine im Wesentlichen dreieckige Form aufweist.

10. Klemme nach Anspruch 8 oder Anspruch 9,
bei welcher das ringförmige Keil- oder Gleitsegment (812) axial in der Rille (806) verschieblich ist.

11. Klemme nach einem der Ansprüche 8-10,
bei welcher eine Innenfläche (820) des ringförmigen Keil- oder Gleitsegments (812) mit Vorsprüngen oder Zähnen versehen ist, um die kleinere innere Bohrlochverrohrung (810, 52) besser fassen zu können.

12. Klemme nach einem der vorigen Ansprüche,
bei welcher die Klemmeinrichtung nicht invasiv ist.

13. Klemme nach einem der vorigen Ansprüche,
welche weiter ein axiales Festziehsystem beinhaltet, um den Kompressionskragen (70) in axialer Richtung relativ zum Kompressionsring (64) zu bewegen.

14. Klemme nach einem der vorigen Ansprüche,
die weiter eine Einrichtung zum Halten des Kompressionsrings (64) in axialer Position relativ zum Kompressionskragen (70) enthält.

15. Klemme nach Anspruch 14,
bei welcher die Einrichtung einen Abstandsring (12) umfasst.

16. Klemme nach Anspruch 14,
bei welcher der Kompressionsring (64) eine Hülse (1) umfasst, welche einen zylindrischen, mit Außengewinde versehenen Abschnitt aufweist, und wobei der Abstandsring (12) ein Innengewinde aufweist, welches mit dem mit Gewinde versehenen Hülsenabschnitt verbunden ist.

17. Klemme nach Anspruch 15,
bei welcher der Abstandsring (12) entfernbar ist.

18. Klemme nach einem der vorigen Ansprüche,
bei welcher die kleinere innere Bohrlochverrohrung (52) eine Aufhängung für eine Bohrlochverrohrung zum Halten einer Bohrlochverrohrung (54) in einem Bohrloch ist.

19. Klemme nach Anspruch 13,
welche weiter ein hydraulisch ausdehnbares ringförmiges Druckelement, welches zum Kompressionskragen (70) gehört, zum Bewegen des Kompressionskragens (70) relativ zum Kompressionsring (64) enthält.

20. Klemme nach Anspruch 19,
wobei das Druckelement weiter eine Dichtung zwischen dem Kompressionsring (64) und dem Kompressionskragen (70) umfasst.

21. Klemme nach einem der vorigen Ansprüche,
bei welcher die Achse der Klemmanordnung vertikal verläuft.

22. Klemme nach einem der vorigen Ansprüche,
die weiter sich in radialer Richtung erstreckende Bolzen (102) enthält, welche sich durch Gewindebohrungen im Kompressionskragen (70) erstrecken und in axialer Richtung zum Kompressionsring (64) geführt sind.

23. Klemme nach Anspruch 22,
bei welcher jeder der Bolzen (102) ein Ende aufweist, welches einen sich verjüngenden Finger (8) umfasst, sowie Aussparungen (11) um die größere äußere Bohrlochverrohrung (50) herum vorgesehen sind, welche geneigte Flanken aufweisen und so positioniert sind, dass wenn die Bolzen (102) in die Aussparungen (11) vorgeschoben werden, die Finger (8) zunächst mit dem geneigten Flanken in Kontakt kommen und anschließend den Kompressionskragen (70) nach innen in Richtung des Kompressionsrings (64) ziehen.

24. Klemme nach einem der vorigen Ansprüche,
bei welcher die Innenbohrung der größeren äußeren Bohrlochverrohrung (50) einen konstanten Innendurchmesser hat.

25. Klemme nach einem der vorigen Ansprüche,
bei welcher der Kompressionsring (64) sich zwischen der äußeren Bohrlochverrohrung (50) mit größerem Durchmesser und dem Kompressionskragen (70) befindet.

26. Klemme nach einem der vorigen Ansprüche,
bei welcher die äußere Bohrlochverrohrung (50) spannungsfrei ist, um Umfangsspannungen zu reduzieren.

27. Klemme nach Anspruch 26,
bei welcher der spannungsbefreiende Mechanismus aus einer Mehrzahl winkelbeabstandeter Schlitze (882, 884) in der äußeren Bohrlochverrohrung (50) besteht.

28. Klemme nach Anspruch 27,
welche Schlitze (884) in der inneren Wand der äußeren Bohrlochverrohrung (70) enthält.

29. Klemme nach Anspruch 28,
welche Schlitze (882) in der Außenwand der äußeren Bohrlochverrohrung (70) enthält.

30. Klemme nach Anspruch 1,
bei welcher der Kompressionsring (64) und der Kompressionskragen (70) selektiv entlang der Achse der größeren äußeren Bohrlochverrohrung (50) bewegbar sind.

31. Klemme nach Anspruch 30,
die weiter eine Halteeinrichtung zum Sichern des Kompressionsrings (64) und des Kompressionskragens (70) in der gewählten Position enthält.

32. Klemme nach einem der vorigen Ansprüche,
bei welcher die größere äußere Bohrlochverrohrung (50) einen sich radial erstreckenden Abschnitt zum Stützen des Kompressionsrings (64) enthält, und wobei der Kompressionskragen (70) sich oberhalb des sich radial erstreckenden Abschnitts und in einem in Umfangsrichtung umgebenden Eingriff mit dem Kompressionsring (64) befindet.

33. Klemme nach Anspruch 32,
bei der der sich radial erstreckende Abschnitt eine Gewindebohrung enthält und der Kompressionskragen (70) eine Durchgangsbohrung in axialer Flucht mit der Gewindebohrung enthält, wobei die Klemme weiter einen Montagegewindebolzen enthält, welcher durch die Durchgangsbohrung hindurch geführt ist und einen Kopf aufweist, der zum Zusammengreifen mit dem Kompressionskragen (70) ausgebildet ist, wodurch der Vorschub des Bolzens in die Bohrung den Kompressionskragen (70) relativ zum Kompressionsring (64) bewegt.

34. Klemme nach Anspruch 1,
welche weiter eine Dichtung zwischen der kleineren inneren Bohrlochverrohrung (52) und der größeren äußeren Bohrlochverrohrung (50) enthält.

35. Klemme nach Anspruch 1,
welche einen Spannungsprüfer (902) an der Innenwand (904) der kleineren inneren Bohrlochverrohrung (906, 52) enthält.

36. Klemme nach Anspruch 1,
welche weiter eine Mehrzahl Klemmanordnungen (980) umfasst, welche axial voneinander beabstandet entlang des äußeren Randes der größeren äußeren Bohrlochverrohrung (982, 50) positioniert sind.

37. Klemme nach Anspruch 1,
welche weiter eine Mehrzahl von Ringen umfasst, welche in axialer Richtung voneinander beabstandet und am Rand der größeren äußeren Bohrlochverrohrung montiert sind.

38. Verfahren zum Festklemmen einer kleineren inneren Bohrlochverrohrung (420, 52) innerhalb einer konzentrischen größeren äußeren Bohrlochverrohrung (416, 50), wobei das Verfahren die folgenden Schritte umfasst:
a. Platzieren einer kleineren inneren Bohrlochverrohrung (420, 52) innerhalb einer größeren äußeren Bohrlochverrohrung (416, 50);
b. Ausüben einer radial nach innen gerichteten Kraft auf die Außenseite der größeren äußeren Bohrlochverrohrung (416, 50) derart, dass die größere äußere Bohrlochverrohrung (416, 50) sich leicht nach innen verformt, um die kleinere innere Bohrlochverrohrung (420, 52) festzuklemmen;
c. Lösen der radial nach innen gerichteten Kräfte, sodass die größere äußere Bohrlochverrohrung (416, 50) die kleinere innere Bohrlochverrohrung (420, 52) loslässt; und
**gekennzeichnet durch** Bereitstellen einer mechanischen Verriegelungseinrichtung (400), die innerhalb der größeren äußeren Bohrlochverrohrung (416, 50) positioniert ist, welche dazu eingerichtet ist, im Gebrauchszustand die kleinere innere Bohrlochverrohrung (420, 52) aktiv zu greifen und in Position zu arretieren.

39. Verfahren nach Anspruch 38,
bei welchem die radial nach innen gerichtete Kraft ausgeübt wird, indem ein hydraulisches Fluid in eine Kammer (602) eingeleitet wird, welche zwischen der größeren äußeren Bohrlochverrohrung (416, 50) und einem an der größeren äußeren Bohrlochverrohrung (416, 50) montierten Kompressionsring (64) ausgebildet ist.

40. Verfahren nach Anspruch 38,
bei welchem die radial nach innen gerichtete Kraft ausgeübt wird, indem ein sich verjüngender Kompressionskragen (70) relativ zu einem sich verjüngenden Kompressionsring (64) bewegt wird, welcher an der größeren äußeren Bohrlochverrohrung (416, 50) angebracht ist.

41. Verfahren nach Anspruch 40,
bei welchem der Kompressionskragen (70) durch Aktivieren eines hydraulisch ausdehnbaren ringförmigen Druckelements bewegt wird.

42. Verfahren nach Anspruch 40,
bei welchem der Kompressionskragen (70) durch Drehen von mit einem Gewinde versehenen zum Kompressionskragen (70) gehörigen Befestigungselementen bewegt wird.

43. Verfahren nach Anspruch 38,
bei welchem ein Kompressionsring (64) zuerst in eine gewünschte Lage entlang der größeren äußeren Bohrlochverrohrung (416, 50) bewegt und anschließend verwendet wird, um die radial einwärts gerichtete Kraft auszuüben.

## Revendications

1. Agencement de serrage pour des tubages de puits concentriques comprenant :
un collier de serrage détachable pour serrer des tubages de puits concentriques, et
un tubage de puits intérieur plus petit (420, 52) ayant des parois intérieure et extérieure et d'un premier diamètre extérieur à l'intérieur d'un tubage de puits extérieur plus grand (416, 50) ayant un axe central et des parois intérieure et extérieure d'un second diamètre intérieur plus grand,
le collier de serrage détachable comprenant :
a) un anneau de compression (64) ayant une surface intérieure afin d'entourer de manière périphérique et de venir en prise avec la paroi extérieure du tubage de puits extérieur plus grand (416, 50) et ayant une surface externe qui est effilée de manière conique par rapport à l'axe ;
b) un collier de compression (70) en communication avec l'anneau de compression (64) afin de générer des forces à l'intérieur des étendues de l'anneau de compression (64), le tubage de puits intérieur plus petit (420, 52) pouvant être fixé et venir en prise à l'intérieur du tubage de puits extérieur plus grand (416, 50) par une réduction du diamètre intérieur du tubage de puits extérieur plus grand (416, 50) causée par lesdites forces, et le tubage de puits intérieur plus petit (420, 52) pouvant se désengager par une libération desdites forces, le collier de compression (70) ayant une surface effilée interne, le collier de compression (70) étant positionné en alignement axial avec l'anneau de compression (64) et en relation périphérique avec celui-ci, moyennant quoi un mouvement axial du collier de compression (70) par rapport à l'anneau de compression (64) conduit à l'application d'une force de compression radiale sur l'anneau de compression (64) afin de déformer par la force l'anneau de compression (64) dans la paroi extérieure du tubage de puits extérieur plus grand (416, 50), forçant la paroi intérieure du tubage de puits extérieur plus grand (416, 50) radialement vers l'intérieur afin de fournir une force d'adhérence pour serrer et fixer le tubage de puits intérieur (420, 52) ;
**caractérisé en ce que** le collier de serrage détachable comprend en outre un dispositif de verrouillage mécanique (400) positionné à l'intérieur du tubage de puits extérieur plus grand (416, 50) qui vient positivement en prise et verrouille le tubage de puits intérieur plus petit (420, 52) en position.

2. Collier de serrage selon la revendication 1, dans lequel le dispositif de verrouillage (400) est agencé, lors de l'utilisation, de façon à empêcher un mouvement substantiel du tubage de puits intérieur plus petit (420, 52) dans le cas où la force entre le diamètre intérieur du tubage de puits extérieur plus grand (416, 50) et le tubage de puits intérieur plus petit (420, 52) perd de l'adhérence.

3. Collier de serrage selon la revendication 1 ou 2, dans lequel le dispositif de verrouillage (400) comprend un organe extérieur (402) pouvant venir en prise avec un organe intérieur (404).

4. Collier de serrage selon la revendication 3, dans lequel une partie inférieure de l'organe extérieur (402) comprend un épaulement effilé (412) afin de venir en prise avec un épaulement effilé (410) sur la surface interne du tubage de puits extérieur plus grand (416, 50).

5. Collier de serrage selon la revendication 3 ou 4, dans lequel l'organe intérieur (404) a une partie supérieure filetée (418) afin de venir en prise avec une partie filetée similaire sur le tubage de puits intérieur plus petit (420, 52).

6. Collier de serrage selon l'une quelconque des revendications précédentes, dans lequel le dispositif de verrouillage (400) est ajustable axialement.

7. Collier de serrage selon la revendication 6, dans lequel un organe extérieur (402) est ajusté de sorte qu'un épaulement (410) soit en contact ou immédiatement au-dessus d'un épaulement (412) du tubage de puits extérieur plus grand (416, 50).

8. Collier de serrage selon la revendication 1, dans lequel le dispositif de verrouillage (400) comprend un segment de cale ou de coin de retenue annulaire (812) disposé dans une rainure (806) formée dans le tubage de puits extérieur (808, 50).

9. Collier de serrage selon la revendication 8, dans lequel la rainure (806) est de forme sensiblement triangulaire.

10. Collier de serrage selon la revendication 8 ou 9, dans lequel le segment de cale ou de coin de retenue annulaire (812) peut coulisser axialement dans la rainure (806).

11. Collier de serrage selon l'une quelconque des revendications 8 à 10, dans lequel une surface interne (820) du segment de cale ou de coin de retenue annulaire (812) est pourvue d'encoches ou de dents afin de mieux adhérer au tubage de puits intérieur plus petit (810, 52).

12. Collier de serrage selon l'une quelconque des revendications précédentes, dans lequel le dispositif de serrage est non invasif.

13. Collier de serrage selon l'une quelconque des revendications précédentes, comprenant en outre un système de resserrement axial afin de déplacer le collier de compression (70) axialement par rapport à l'anneau de compression (64).

14. Collier de serrage selon l'une quelconque des revendications précédentes, comprenant un dispositif permettant de maintenir l'anneau de compression (64) dans une position axiale par rapport au collier de compression (70).

15. Collier de serrage selon la revendication 14, dans lequel le dispositif comprend une bague d'espacement (12).

16. Collier de serrage selon la revendication 14, dans lequel l'anneau de compression (64) comprend un manchon (1) ayant une partie cylindrique filetée à l'extérieur et dans lequel la bague d'espacement (12) comprend des filetages internes accouplés à la partie de manchon filetée.

17. Collier de serrage selon la revendication 15, dans lequel la bague d'espacement (12) est amovible.

18. Collier de serrage selon l'une quelconque des revendications précédentes, dans lequel le tubage de puits intérieur plus petit (52) est une suspension de tubage afin de soutenir un tubage (54) dans un puits.

19. Collier de serrage selon la revendication 13, comprenant en outre un vérin annulaire hydrauliquement extensible associé au collier de compression (70) afin de déplacer le collier de compression (70) par rapport à l'anneau de compression (64).

20. Collier de serrage selon la revendication 19, le vérin comprenant en outre un joint entre l'anneau de compression (64) et le collier de compression (70).

21. Collier de serrage selon l'une quelconque des revendications précédentes, dans lequel l'axe de l'agencement de serrage est vertical.

22. Collier de serrage selon l'une quelconque des revendications précédentes, comprenant en outre des boulons (102) s'étendant radialement qui s'étendent à travers des alésages filetés dans le collier de compression (70) et sont dirigés axialement vers l'anneau de compression (64).

23. Collier de serrage selon la revendication 22, dans lequel chacun desdits boulons (102) ayant une extrémité comprenant une butée effilée (8), et des évidements (11) autour du tubage de puits extérieur plus grand (50), les évidements (11) ayant des flancs inclinés et étant positionnés de telle sorte que, lorsque les boulons (102) sont avancés dans les évidements (11), les butées (8) entrent d'abord en contact avec les flancs inclinés et tirent ensuite le collier de compression (70) vers l'intérieur vers l'anneau de compression (64).

24. Collier de serrage selon l'une quelconque des revendications précédentes, dans lequel un alésage interne du tubage de puits extérieur plus grand (50) a un diamètre intérieur constant.

25. Collier de serrage selon l'une quelconque des revendications précédentes, dans lequel l'anneau de compression (64) se trouve entre le tubage de puits extérieur de plus grand diamètre (50) et le collier de compression (70).

26. Collier de serrage selon l'une quelconque des revendications précédentes, dans lequel le tubage de puits extérieur (50) est libéré de contraintes afin de réduire les contraintes périphériques.

27. Collier de serrage selon la revendication 26, dans lequel le mécanisme de libération de contraintes est une pluralité de fentes espacées de manière angulaire (882, 884) dans le tubage de puits extérieur (50).

28. Collier de serrage selon la revendication 27, comprenant des fentes (884) dans la paroi intérieure du tubage de puits extérieur (70).

29. Collier de serrage selon la revendication 28, comprenant des fentes (882) dans la paroi extérieure du tubage de puits extérieur (70).

30. Collier de serrage selon la revendication 1, dans lequel l'anneau de compression (64) et le collier de compression (70) peuvent être déplacés de manière sélective le long de l'axe du tubage de puits extérieur plus grand (50).

31. Collier de serrage selon la revendication 30, comprenant en outre un dispositif de maintien afin de fixer l'anneau de compression (64) et le collier de compression (70) dans la position sélectionnée.

32. Collier de serrage selon l'une quelconque des revendications précédentes, dans lequel le tubage de puits extérieur plus grand (50) comprend une partie s'étendant radialement afin de soutenir l'anneau de compression (64) et dans lequel le collier de compression (70) est positionné au-dessus de la partie s'étendant radialement et dans un engagement d'entourage périphérique avec l'anneau de compression (64).

33. Collier de serrage selon la revendication 32, la partie s'étendant radialement comprenant un alésage fileté et le collier de compression (70) comprenant un alésage de dégagement en alignement axial avec l'alésage fileté, le collier de serrage comprenant en outre un boulon de montage fileté traversant l'alésage de dégagement et ayant une tête adaptée pour venir en prise avec le collier de compression (70), moyennant quoi l'avance du boulon dans l'alésage déplace le collier de compression (70) par rapport à l'anneau de compression (64).

34. Collier de serrage selon la revendication 1, comprenant en outre un joint entre le tubage de puits intérieur plus petit (52) et le tubage de puits extérieur plus grand (50).

35. Collier de serrage selon la revendication 1, comprenant un extensomètre (902) sur la paroi intérieure (904) du tubage de puits intérieur plus petit (906, 52).

36. Collier de serrage selon la revendication 1, comprenant en outre une pluralité d'ensembles de serrage (980) positionnés dans une relation espacée axialement le long de la périphérie externe du tubage de puits extérieur plus grand (982, 50).

37. Collier de serrage selon la revendication 1, comprenant en outre une pluralité d'anneaux espacés axialement et montés sur la périphérie du tubage de puits extérieur plus grand.

38. Procédé de serrage d'un tubage de puits intérieur plus petit (420, 52) à l'intérieur d'un tubage de puits extérieur plus grand (416, 50) concentrique, le procédé comprenant les étapes :
a) placer le tubage de puits intérieur plus petit (420, 52) à l'intérieur du tubage de puits extérieur plus grand (416, 50) ;
b) exercer une force radialement vers l'intérieur sur l'extérieur du tubage de puits extérieur plus grand (416, 50) de sorte que le tubage de puits extérieur plus grand (416, 50) fléchisse légèrement vers l'intérieur afin de serrer le tubage de puits intérieur plus petit (420, 52) ;
c) libérer les forces radialement vers l'intérieur de sorte que le tubage de puits extérieur plus grand (416, 50) libère le tubage de puits intérieur plus petit (420, 52) ; et
**caractérisé par** la fourniture d'un dispositif de verrouillage mécanique (400) positionné à l'intérieur du tubage de puits extérieur plus grand (416, 50) qui est agencé, lors de l'utilisation, de façon à venir positivement en prise et verrouiller le tubage de puits intérieur plus petit (420, 52) en position.

39. Procédé selon la revendication 38, dans lequel la force radialement vers l'intérieur est appliquée par la communication d'un fluide hydraulique dans une chambre (602) formée entre le tubage de puits extérieur plus grand (416, 50) et un anneau de compression (64) monté sur le tubage de puits extérieur plus grand (416, 50).

40. Procédé selon la revendication 38, dans lequel la force radialement vers l'intérieur est appliquée en déplaçant un collier de compression effilé (70) par rapport à un anneau de compression effilé (64) attaché au tubage de puits extérieur plus grand (416, 50).

41. Procédé selon la revendication 40, dans lequel le collier de compression (70) est déplacé en activant un vérin annulaire hydrauliquement extensible.

42. Procédé selon la revendication 40, dans lequel le collier de compression (70) est déplacé en tournant des dispositifs de fixation filetés associés au collier de compression (70).

43. Procédé selon la revendication 38, dans lequel un anneau de compression (64) est d'abord déplacé vers un emplacement souhaité le long du tubage de puits extérieur plus grand (416, 50), puis utilisé pour appliquer la force radialement vers l'intérieur.
